# EUROPÄISCHE PATENTSCHRIFT

(11) **EP 3 966 649 B1**
(45) Veröffentlichungstag und Bekanntmachung des Hinweises auf die Patenterteilung: **25.03.2026**
(21) Anmeldenummer: 20729616.1
(22) Anmeldetag: 29.04.2020
(51) Int. Cl.: G05B 23/02, G05B 17/02, G06N 3/08, G06N 20/00

(54) **VORHERSAGEVERFAHREN UND VORRICHTUNGEN HIERZU**
PREDICTION METHOD AND DEVICES FOR SAME
PROCÉDÉ DE PRÉDICTION ET DISPOSITIFS POUR CELUI-CI

(30) Priorität: 09.05.2019 DE 102019112099; 10.05.2019 DE 102019206844
(43) Veröffentlichungstag der Anmeldung: 16.03.2022
(73) Patentinhaber: Dürr Systems AG, 74321 Bietigheim-Bissingen (DE)
(72) Erfinder: ALT, Simon, 70197 Stuttgart (DE); SCHLOTTERER, Tobias, 72379 Hechingen (DE); WEICKGENANNT, Martin, 74321 Bietigheim-Bissingen (DE); HUMMEL, Markus, 73660 Urbach (DE); BERNER, Jens, 71696 Möglingen (DE); BENSCH, Hauke, 23562 Lübeck (DE); VOIGT, Daniel, 04229 Leipzig (DE)
(74) Vertreter: DTS Patent- und Rechtsanwälte PartmbB
(86) Internationale Anmeldenummer: PCT/DE2020/100359
(87) Internationale Veröffentlichungsnummer: WO 2020/224717

(56) Entgegenhaltungen:
- DE-A1- 102006 045 429
- US-A1- 2006 259 198
- US-A1- 2015 277 429
- ANDREW KUSIAK ET AL: "The prediction and diagnosis of wind turbine faults", RENEWABLE ENERGY, PERGAMON PRESS, OXFORD, GB, vol. 36, no. 1, 19 May 2010 (2010-05-19), pages 16 - 23, XP028362402, ISSN: 0960-1481, [retrieved on 20100524], DOI: 10.1016/J.RENENE.2010.05.014
- ZHENYU WU ET AL: "An Integrated Ensemble Learning Model for Imbalanced Fault Diagnostics and Prognostics", IEEE ACCESS, vol. 6, 1 January 2018 (2018-01-01), pages 8394 - 8402, XP055736016, DOI: 10.1109/ACCESS.2018.2807121

## Beschreibung

Die vorliegende Erfindung betrifft ein Verfahren zur Vorhersage von Prozessabweichungen in einer verfahrenstechnischen Anlage, nämlich einer Lackieranlage.

US 2006/259198 A1 offenbart eine Fehlervorhersage mittels eines neuronalen Netzwerks.

ANDREW KUSIAK ET AL: "The prediction and diagnosis of wind turbine faults" offenbart eine Fehlervorhersage mittels eines neuronalen Netzwerks, welches mit ausgewogenen Daten trainiert wurde.

Der vorliegenden Erfindung liegt die Aufgabe zugrunde, ein Verfahren zur Vorhersage von Prozessabweichungen in einer verfahrenstechnischen Anlage, nämlich einer Lackieranlage, bereitzustellen, mittels welchem Prozessabweichungen einfach und zuverlässig vorhersagbar sind.

Diese Aufgabe wird durch ein Verfahren zur Vorhersage von Prozessabweichungen in einer verfahrenstechnischen Anlage mit den Merkmalen des Anspruchs 1 gelöst.

Ferner sei für das Verständnis der vorliegenden Erfindung ein Verfahren zur Fehleranalyse in einer verfahrenstechnischen Anlage, beispielsweise in einer Lackieranlage, erwähnt.

Das Verfahren zur Fehleranalyse in einer verfahrenstechnischen Anlage, beispielsweise in einer Lackieranlage, umfasst vorzugsweise Folgendes:
- insbesondere automatisches Erkennen einer Fehlersituation in der verfahrenstechnischen Anlage;
- Speichern eines Fehlersituationsdatensatzes zu der jeweiligen erkannten Fehlersituation in einer Fehlerdatenbank;
- automatische Ermittlung einer Fehlerursache für die Fehlersituation und/oder automatische Ermittlung von für die Fehlersituation relevanten Prozesswerten auf Basis des Fehlerdatensatzes einer jeweiligen erkannten Fehlersituation.

Unter für die Fehlersituation ursächlichen Prozesswerten werden im Rahmen dieser Beschreibung und der beigefügten Ansprüche insbesondere für die Fehlersituation ursächliche und/oder mit diesen zusammenhängende Prozesswerte verstanden.

Günstig kann es sein, wenn die Fehlersituation automatisch mittels eines Meldesystems erkannt wird.

Bei einer Ausgestaltung des Verfahrens zur Fehleranalyse in einer verfahrenstechnischen Anlage ist vorgesehen, dass zur automatischen Ermittlung der Fehlerursache für die Fehlersituation und/oder der für die Fehlersituation relevanten Prozesswerte einer oder mehrere Prozesswerte automatisch basierend auf einem oder mehreren der folgenden Verknüpfungskriterien mit der Fehlersituation verknüpft werden:
- einer Vorverknüpfung aus einem Meldesystem;
- einer Zuordnung eines Prozesswerts zu demselben Anlagenteil der verfahrenstechnischen Anlage, in dem die Fehlersituation aufgetreten ist;
- einer Verknüpfung eines Prozesswerts mit einer historischen Fehlersituation aufgrund einer aktiven Auswahl eines Benutzers;
- einer aktiven Auswahl des Prozesswerts durch einen Benutzer.

Bei einer Ausgestaltung des Verfahrens zur Fehleranalyse in einer verfahrenstechnischen Anlage ist vorgesehen, dass zur automatischen Ermittlung der Fehlerursache für die Fehlersituation und/oder der für die Fehlersituation relevanten Prozesswerte eine automatische Priorisierung der mit der Fehlersituation verknüpften Prozesswerte basierend auf einem oder mehreren der folgenden Priorisierungskriterien automatisch durchgeführt wird:
- einer Prozessrelevanz der Prozesswerte;
- einer Position eines Prozesswerts oder eines den Prozesswert ermittelnden Sensors innerhalb der verfahrenstechnischen Anlage;
- einem Betrag einer Abweichung eines Prozesswerts von einem definierten Prozessfenster und/oder von einem Normalzustand;
- einer Priorisierung von historischen Prozesswerten in historischen Fehlersituationen;
- durch Übernehmen einer Priorisierung der Fehlerursache und/oder der Prozesswerte aus einem Meldesystem;
- einer Priorisierung durch einen Benutzer.

Eine basierend auf der Prozessrelevanz der Prozesswerte durchgeführte Priorisierung erfolgt vorzugsweise derart, dass prozesskritische Prozesswerte höher priorisiert werden.

Unter einem prozesskritischen Prozesswert wird im Rahmen dieser Beschreibung und der beigefügten Ansprüche insbesondere ein Prozesswert verstanden, welcher in dem Meldesystem als prozesskritisch hinterlegt ist und/oder von einem Benutzer als prozesskritisch definiert worden ist.

Eine basierend auf einer Position des Prozesswerts oder eines den Prozesswert ermittelnden Sensors innerhalb der verfahrenstechnischen Anlage durchgeführte Priorisierung erfolgt vorzugsweise derart, dass Prozesswerte, welche demselben, einem nahegelegenen und/oder einem vergleichbaren Anlagenteil zugeordnet sind, höher priorisiert werden.

Unter vergleichbaren Anlagenteilen werden im Rahmen dieser Beschreibung und der beigefügten Ansprüche insbesondere Anlagenteile mit ähnlichem oder identischem Aufbau verstanden.

Vergleichbare Anlagenteile sind beispielsweise baugleiche oder bauähnliche industrielle Zuluftanlagen, baugleiche oder bauähnliche Konditionierungsmodule einer industriellen Zuluftanlage oder baugleiche oder bauähnliche Pumpen oder Motoren.

Eine Position des den Prozesswert ermittelnden Sensors wird vorzugsweise anhand einer Systematik aus einem Nummerierungssystems (sogenanntes "plant numbering system") in der verfahrenstechnischen Anlage identifiziert.

Prozesswerte werden vorzugsweise mittels des Nummerierungssystems eindeutig bezeichnet.

Vorzugsweise werden Prozesswerte abhängig von ihrer Bezeichnung in dem Nummerierungssystem priorisiert.

Das Nummerierungssystem umfasst zur eindeutigen Bezeichnung von Sensoren und/oder Prozesswerten vorzugsweise die Bezeichnung einer Funktionseinheit, die Bezeichnung einer Funktionsgruppe der jeweiligen Funktionseinheit und/oder die Bezeichnung eines Funktionselements der jeweiligen Funktionsgruppe, welcher der jeweilige Sensor und/oder Prozesswert zugeordnet ist.

Günstig kann es ferner sein, wenn die eindeutige Bezeichnung eines Prozesswertes mittels des Nummerierungssystems eine Bezeichnung einer Art der gemessenen Größe umfasst, beispielsweise eine Temperatur, einen Durchfluss, einen Druck.

Beispielsweise ist eine Zuluftanlage einer Lackieranlage eine Funktionseinheit, wobei ein Konditionierungsmodul der Zuluftanlage eine Funktionsgruppe ist und wobei eine Pumpe der Zuluftanlage ein Funktionselement ist.

Ein Normalzustand eines Prozesswerts wird vorzugsweise mittels eines Verfahrens zur Anomalie- und/oder Fehlererkennung ermittelt.

Eine basierend auf einer Priorisierung von historischen Prozesswerten in historischen Fehlersituationen durchgeführte Priorisierung erfolgt vorzugsweise derart, dass Prozesswerte analog zu der historischen Fehlersituation priorisiert werden.

Bei einer Ausgestaltung des Verfahrens zur Fehleranalyse in einer verfahrenstechnischen Anlage ist vorgesehen, dass zur automatischen Ermittlung der Fehlerursache für die Fehlersituation und/oder der für die Fehlersituation relevanten Prozesswerte weitere Fehlerursachen und/oder Prozesswerte vorgeschlagen werden, wobei das Vorschlagen anhand eines oder mehrerer der folgenden Vorschlagskriterien automatisch durchgeführt wird:
- einer Prozessrelevanz der Prozesswerte;
- einer Position eines Prozesswerts oder eines den Prozesswert ermittelnden Sensors innerhalb der verfahrenstechnischen Anlage;
- einem Betrag einer Abweichung eines Prozesswerts von einem definierten Prozessfenster und/oder von einem Normalzustand;
- einer Priorisierung von historischen Prozesswerten in historischen Fehlersituationen;
- physikalischen Abhängigkeiten der Prozesswerte.

Ein prozesskritischer Prozesswert wird vorzugsweise bevorzugt vorgeschlagen.

Ein basierend auf einer Position des Prozesswerts oder eines den Prozesswert ermittelnden Sensors innerhalb der verfahrenstechnischen Anlage durchgeführter Vorschlag erfolgt vorzugsweise derart, dass Prozesswerte, welche demselben, einem nahegelegenen und/oder einem vergleichbaren Anlagenteil zugeordnet sind, eher vorgeschlagen werden.

Vorzugsweise werden Prozesswerte abhängig von ihrer Bezeichnung in dem Nummerierungssystem vorgeschlagen.

Ein basierend auf einer Priorisierung von historischen Prozesswerten in historischen Fehlersituationen durchgeführter Vorschlag erfolgt vorzugsweise derart, dass in der historischen Fehlersituation hoch priorisierte Prozesswerte bevorzugt vorgeschlagen werden.

Zum Ermitteln eines Vorschlags basierend auf physikalischen Abhängigkeiten der Prozesswerte werden die physikalischen Abhängigkeiten vorzugsweise als Expertenregel von einem Benutzer definiert.

Vorzugsweise ist eine Priorisierung der vorgeschlagenen Fehlerursachen und/oder Prozesswerte durch einen Benutzer änderbar.

Bei einer Ausgestaltung des Verfahrens zur Fehleranalyse in einer verfahrenstechnischen Anlage ist vorgesehen, dass historische Fehlersituationen aus einer Fehlerdatenbank anhand eines oder mehrerer der folgenden Ähnlichkeitskriterien ermittelt werden:
- einer Fehlerklassifikation der historischen Fehlersituation;
- einer historischen Fehlersituation an demselben oder einem vergleichbaren Anlagenteil;
- identischen oder ähnlichen Prozesswerten der historischen Fehlersituation zu Prozesswerten der erkannten Fehlersituation.

Historische Fehlersituationen mit einer zu der erkannten Fehlersituation identischen Fehlerklassifikation werden vorzugsweise bevorzugt ermittelt.

Eine Identität oder Ähnlichkeit der Prozesswerte der historischen Fehlersituation zu den Prozesswerten der erkannten Fehlersituation wird vorzugsweise durch einen Vergleichsalgorithmus ermittelt.

Bei einer Ausgestaltung des Verfahrens zur Fehleranalyse in einer verfahrenstechnischen Anlage ist vorgesehen, dass historische Prozesswerte aus einer Prozessdatenbank ermittelt werden, welche zu Prozesswerten der erkannten Fehlersituation identisch oder ähnlich sind.

Vorzugsweise wird zur Ermittlung der historischen Prozesswerte eine Prozessdatenbank durchsucht. Günstig kann es sein, wenn eine Identität oder Ähnlichkeit der Prozesswerte mittels eines Vergleichsalgorithmus ermittelt wird.

Die Ermittlung der historischen Prozesswerte erfolgt vorzugsweise automatisch.

Bei einer Ausgestaltung des Verfahrens zur Fehleranalyse in einer verfahrenstechnischen Anlage ist vorgesehen, dass die ermittelten historischen Prozesswerte als zu einer historischen Fehlersituation gehörig gekennzeichnet werden.

Bei einer Ausgestaltung des Verfahrens zur Fehleranalyse in einer verfahrenstechnischen Anlage ist vorgesehen, dass zu einer erkannten Fehlersituation ein Fehlersituationsdatensatz in einer Fehlerdatenbank gespeichert wird.

Bei einer Ausgestaltung des Verfahrens zur Fehleranalyse in einer verfahrenstechnischen Anlage ist vorgesehen, dass ein jeweiliger Fehleridentifikationsdatensatz eine oder mehrere der folgenden Fehlersituationsdaten umfasst:
- eine Fehlerklassifikation der Fehlersituation;
- mit der Fehlersituation verknüpfte Prozesswerte basierend auf einer Vorverknüpfung aus einem Meldesystem;
- Informationen über einen Zeitpunkt des Auftretens einer jeweiligen Fehlersituation;
- Informationen über eine Zeitdauer des Auftretens einer jeweiligen Fehlersituation;
- Informationen über den Ort des Auftretens einer jeweiligen Fehlersituation;
- Alarme;
- Statusmeldungen.

Bei einer Ausgestaltung des Verfahrens zur Fehleranalyse in einer verfahrenstechnischen Anlage ist vorgesehen, dass der Fehlersituationsdatensatz einer jeweiligen Fehlersituation Fehleridentifikationsdaten zur eindeutigen Identifikation der erkannten Fehlersituation umfasst.

Die Fehleridentifikationsdaten sind vorzugsweise zur eindeutigen Bezeichnung einer Fehlersituation verwendbar.

Bei einer Ausgestaltung des Verfahrens zur Fehleranalyse in einer verfahrenstechnischen Anlage ist vorgesehen, dass in dem Fehlersituationsdatensatz einer jeweiligen Fehlersituation Dokumentationsdaten und Fehlerbehebungsdaten gespeichert werden.

Dokumentationsdaten umfassen vorzugsweise Betriebsanleitungen, Handbücher, Schaltpläne, Verfahrensschemata und/oder Datenblätter der von einer jeweiligen Fehlersituation betroffenen Anlagenteile.

Fehlerbehebungsdaten umfassen vorzugsweise Informationen zur Behebung einer Fehlersituation, insbesondere Handlungsanweisungen zur Behebung einer Fehlersituation.

Insbesondere sind Dokumentationsdaten und Fehlerbehebungsdaten auch durch einen Benutzer zu dem Fehlersituationsdatensatz hinzufügbar.

Bei einer Ausgestaltung des Verfahrens zur Fehleranalyse in einer verfahrenstechnischen Anlage ist vorgesehen, dass Prozesswerte im Betrieb der verfahrenstechnischen Anlage zeitlich synchronisiert mit einer erkannten Fehlersituation gespeichert werden.

Bei einer Ausgestaltung des Verfahrens zur Fehleranalyse in einer verfahrenstechnischen Anlage ist vorgesehen, dass Prozesswerte mit einem Zeitstempel versehen werden, mittels welchem die Prozesswerte einem Zeitpunkt eindeutig zuordenbar sind.

Ferner kann ein Fehleranalysesystem zur Fehleranalyse in einer verfahrenstechnischen Anlage, beispielsweise in einer Lackieranlage, vorgesehen sein, welches zur Durchführung des Verfahrens zur Fehleranalyse in einer verfahrenstechnischen Anlage, beispielsweise in einer Lackieranlage, ausgebildet und eingerichtet ist.

Ferner kann ein industrielles Steuerungssystem vorgesehen sein, welches ein derartiges Fehleranalysesystem umfasst.

Das Verfahren zur Vorhersage von Prozessabweichungen in einer verfahrenstechnischen Anlage, welche eine Lackieranlage ist, umfasst Folgendes:
- automatisches Erstellen eines Vorhersagemodells;
- Vorhersage von Prozessabweichungen im Betrieb der verfahrenstechnischen Anlage unter Verwendung des Vorhersagemodells.

Vorzugsweise ist eine Prozessabweichung von produktionskritischen Prozesswerten mittels des Vorhersagemodells vorhersagbar.

Bei einer Ausgestaltung des Verfahrens zur Vorhersage von Prozessabweichungen ist vorgesehen, dass das Verfahren zur Vorhersage von Prozessabweichungen in einer industriellen Zuluftanlage, in einer Vorbehandlungsstation, in einer Station zur kathodischen Tauchlackierung und/oder in einer Trocknerstation durchgeführt wird.

Industrielle Zuluftanlagen, Vorbehandlungsstationen und/oder Stationen zur kathodischen Tauchlackierung sind insbesondere sehr träge verfahrenstechnische Anlagen.

Produktionskritische Prozesswerte derartiger verfahrenstechnischer Anlagen ändern sich daher im Betrieb derselben nur sehr langsam.

Aufgrund der großen Trägheit derartiger verfahrenstechnischer Anlagen ist mittels des Vorhersagemodells eine Prozessabweichung im Betrieb der verfahrenstechnischen Anlage vorzugsweise frühzeitig vorhersagbar.

Vorzugsweise kann somit ein Zeitgewinn für eine Reparatur und/oder Instandhaltung derartiger verfahrenstechnischer Anlagen vor dem Eintreten einer Prozessabweichung erreicht werden.

Eine industrielle Zuluftanlage umfasst vorzugsweise mehrere Konditionierungsmodule, beispielsweise ein Vorheiz-Modul, ein Kühlmodul, ein Nachheiz-Modul und/oder ein Befeuchtermodul.

Vorzugsweise ist das erstellte Vorhersagemodell auf ähnliche verfahrenstechnische Anlagen übertragbar.

Beispielsweise ist es denkbar, dass ein Vorhersagemodell, welches für eine Vorbehandlungsstation erstellt wurde, für eine Station zur kathodischen Tauchlackierung verwendbar.

Erfindungsgemäß ist vorgesehen, dass mittels des Vorhersagemodells Prozessabweichungen von produktionskritischen Prozesswerten in der verfahrenstechnischen Anlage vorhergesagt werden, insbesondere auf Basis von sich ändernden Prozesswerten während einem Betrieb der verfahrenstechnischen Anlage.

Unter produktionskritischen Prozesswerten werden im Rahmen dieser Beschreibung und der beigefügten Ansprüche insbesondere Prozesswerte verstanden, deren Abweichung von einem vorgegebenen Prozessfenster zu einer Qualitätsabweichung, insbesondere zu Qualitätsmängeln, führt.

Produktionskritische Prozesswerte einer industriellen Zuluftanlage sind beispielsweise die Temperatur und die relative Luftfeuchte der mittels der industriellen Zuluftanlage konditionierten Luft, insbesondere an einem Ausblasteil der industriellen Zuluftanlage.

Mittels einer industriellen Zuluftanlage konditionierte Luft wird in einer Lackieranlage vorzugsweise einer Lackierkabine zugeführt und wirkt sich somit vorzugsweise unmittelbar auf eine Behandlungsqualität der in der Lackierkabine behandelten Werkstücke, insbesondere der in der Lackierkabine behandelten Fahrzeugkarosserien, aus.

Beispielsweise ist es möglich, mit dem Vorhersagemodell Prozessabweichungen von produktionskritischen Prozesswerten für einen Prädiktionshorizont von mindestens ungefähr 10 Minuten, beispielsweise von mindestens ungefähr 15 Minuten, vorzugsweise von mindestens ungefähr 20 Minuten, vorherzusagen.

Erfindungsgemäß ist vorgesehen, dass zum automatischen Erstellen des Vorhersagemodells Prozesswerte und/oder Statusgrößen im Betrieb der verfahrenstechnischen Anlage über einen vorgegebenen Zeitraum gespeichert werden.

Wenn die verfahrenstechnische Anlage eine industrielle Zuluftanlage ist, umfassen die gespeicherten Prozesswerte und/oder Statusgrößen vorzugsweise Folgendes:
- Zielgrößen der industriellen Zuluftanlage, insbesondere Temperatur und relative Luftfeuchte der mittels der industriellen Zuluftanlage konditionierten Luft, insbesondere an einem Ausblasteil der industriellen Zuluftanlage;
- Stellgrößen, insbesondere Ventilstellungen von Ventilen von Heiz- und/oder Kühlmodulen der industriellen Zuluftanlage, Drehfrequenzen von Pumpen, insbesondere der Befeuchterpumpe, und/oder Drehfrequenzen von Ventilatoren;
- interne Größen, insbesondere Vor- und/oder Rücklauftemperaturen in der Heiz- und/oder Kühlmodulen der industriellen Zuluftanlage und/oder Luftkonditionen zwischen Konditionierungsmodulen;
- gemessene Störgrößen, insbesondere Außentemperatur und/oder relative Außenluftfeuchte an einem Einblasteil der industriellen Zuluftanlage;
- ungemessene Störgrößen; und/oder
- Statusgrößen, insbesondere Befeuchterpumpe (an/aus), manueller Modus für Pumpen (an/aus), Versorgungsventile (offen/geschlossen), Ventilator (an/aus).

Unter Prozesswerten werden im Rahmen dieser Beschreibung und der beigefügten Ansprüche insbesondere zeitabhängige, kontinuierliche Signale verstanden.

Unter Statusgrößen werden im Rahmen dieser Beschreibung und der beigefügten Ansprüche insbesondere zeitabhängige diskrete Ereignisse verstanden.

Bei einer Ausgestaltung des Verfahrens zur Vorhersage von Prozessabweichungen ist vorgesehen, dass der vorgegebene Zeitraum, über welchen Prozesswerte und/oder Statusgrößen im Betrieb der verfahrenstechnischen Anlage gespeichert werden, abhängig von einem oder mehreren der folgenden Kriterien vorgegeben wird:
- die verfahrenstechnische Anlage ist in dem vorgegebenen Zeitraum zu mindestens ungefähr 60 %, vorzugsweise zu mindestens ungefähr 80 %, in einem betriebsbereiten Zustand, insbesondere für einen Produktionsbetrieb;
- die verfahrenstechnische Anlage ist in dem vorgegebenen Zeitraum zu mindestens ungefähr 60 %, vorzugsweise zu mindestens ungefähr 80 %, in einem produktionsfähigen Zustand;
- die verfahrenstechnische Anlage wird in dem vorgegebenen Zeitraum insbesondere mit sämtlichen möglichen Betriebsstrategien betrieben;
- einer vorgegebenen Anzahl von Prozessabweichungen und/oder Störfällen in dem vorgegebenen Zeitraum.

Wenn die verfahrenstechnische Anlage eine industrielle Zuluftanlage ist, ist diese vorzugsweise in einem betriebsbereiten Zustand für einen Produktionsbetrieb, wenn:
- ein Ventilator der industriellen Zuluftanlage in Betrieb ist (Statusgröße des Ventilators ist "an");
- Konditionierungsmodule der industriellen Zuluftanlage in einem Automatik-Modus betrieben werden;
- mindestens ein Regelventil geöffnet ist; und/oder
- eine Befeuchterpumpe in Betrieb ist (Statusgröße der Befeuchterpumpe ist "an").

Unter einem produktionsfähigen Zustand einer verfahrenstechnischen Anlage wird im Rahmen dieser Beschreibung und der beigefügten Ansprüche insbesondere verstanden, dass sich Zielgrößen der verfahrenstechnischen Anlage innerhalb eines vorgegebenen Prozessfensters befinden.

Wenn die verfahrenstechnische Anlage eine industrielle Zuluftanlage ist, ist diese in einem produktionsfähigen Zustand, wenn sich die Zielgrößen der industriellen Zuluftanlage, insbesondere eine Temperatur und relative Luftfeuchte der mittels der industriellen Zuluftanlage konditionierten Luft, insbesondere an einem Ausblasteil der industriellen Zuluftanlage, innerhalb eines vorgegebenen Prozessfensters befinden.

Eine Vorbehandlungsstation oder eine Station zur kathodischen Tauchlackierung sind insbesondere nur mit einer einzigen Betriebsstrategie betreibbar.

Eine industrielle Zuluftanlage ist insbesondere mit mehreren Betriebsstrategien betreibbar, insbesondere abhängig von Umgebungsbedingungen.

Eine industrielle Zuluftanlage ist beispielsweise mit den folgenden Betriebsstrategien betreibbar: Heizen-Befeuchten, Kühlen-Heizen, Kühlen-Befeuchten, Kühlen, Heizen, Befeuchten.

Wenn die verfahrenstechnische Anlage eine industrielle Zuluftanlage ist, ist es insbesondere denkbar, dass Prozesswerte und/oder Statusgrößen zum automatischen Erstellen des Vorhersagemodells über einen Zeitraum von beispielsweise mindestens ungefähr 6 Monaten, insbesondere über einen Zeitraum von mindestens ungefähr 9 Monaten, vorzugsweise über einen Zeitraum von mindestens ungefähr 12 Monaten, gespeichert werden.

Wenn die verfahrenstechnische Anlage eine Vorbehandlungsstation oder eine Station zur kathodischen Tauchlackierung ist, ist es insbesondere denkbar, dass Prozesswerte und/oder Statusgrößen zum automatischen Erstellen des Vorhersagemodells über einen Zeitraum von beispielsweise mindestens ungefähr 2 Wochen, insbesondere über einen Zeitraum von mindestens ungefähr 4 Wochen, vorzugsweise über einen Zeitraum von mindestens ungefähr 6 Wochen, gespeichert werden.

Beispielsweise ist es denkbar, dass in dem vorgegebenen Zeitraum mindestens ungefähr 30, vorzugsweise mindestens ungefähr 50, Prozessabweichungen und/oder Störfälle auftreten.

Es ist insbesondere auch denkbar, dass der vorgegebene Zeitraum, über welchen Prozesswerte und/oder Statusgrößen im Betrieb der verfahrenstechnischen Anlage gespeichert werden, mehrere nicht zusammenhängende Teilzeiträume umfasst.

Wenn der Zeitraum, über welchen Prozesswerte und/oder Statusgrößen im Betrieb der verfahrenstechnischen Anlage gespeichert werden, mehrere nicht zusammenhängende Teilzeiträume umfasst, weisen die Teilzeiträume vorzugsweise jeweils eines oder mehrere der folgenden Kriterien auf:
- eine Mindestdauer des Teilzeitraums, beispielsweise mindestens ungefähr 30 Minuten;
- ein Betrieb der verfahrenstechnischen Anlage in einem produktionsfähigen und/oder eingeschwungenen Zustand zu Beginn des Teilzeitraums;
- ein Betrieb der verfahrenstechnischen Anlage in einem eingeschwungenen Zustand am Ende eines Teilzeitraums.

Erfindungsgemäß ist vorgesehen, dass zum Erstellen des Vorhersagemodells ein maschinelles Lernverfahren durchgeführt wird, wobei die über den vorgegebenen Zeitraum gespeicherten Prozesswerte und/oder Statusgrößen zur Erstellung des Vorhersagemodells verwendet werden.

Zum automatischen Erstellen des Vorhersagemodells durchgeführte maschinelle Lernverfahren umfassen vorzugsweise eines oder mehrere der folgenden: Gradient Boosting, Random-Forest, Support-Vector-Machine.

Bei einer Ausgestaltung des Verfahrens zur Vorhersage von Prozessabweichungen ist vorgesehen, dass das maschinelle Lernverfahren auf Basis von Features durchgeführt wird, welche aus den über den vorgegebenen Zeitraum gespeicherten Prozesswerten und/oder Statusgrößen extrahiert werden.

Bei einer Ausgestaltung des Verfahrens zur Vorhersage von Prozessabweichungen ist vorgesehen, dass zur Extraktion der Features eines oder mehrere der folgenden verwendet werden:
- statistische Kennzahlen;
- Koeffizienten aus einer Hauptkomponentenanalyse;
- lineare Regressionskoeffizienten;
- dominante Frequenzen und/oder Amplituden aus dem Fourier-Spektrum.

Statistische Kennzahlen umfassen beispielsweise ein Minimum, ein Maximum, einen Median, einen Mittelwert und/oder eine Standardabweichung.

Erfindungsgemäß ist vorgesehen, dass zu einem Training des Vorhersagemodells eine ausgewählte Anzahl von Prädiktionsdatensätzen mit Prozessabweichungen und eine ausgewählte Anzahl von Prädiktionsdatensätzen ohne Prozessabweichungen verwendet werden.

Insbesondere ist es denkbar, dass die ausgewählte Anzahl der Prädiktionsdatensätze mit Prozessabweichungen zumindest näherungsweise der ausgewählten Anzahl von Prädiktionsdatensätzen ohne Prozessabweichung entspricht.

Insbesondere ist es denkbar, dass die ausgewählte Anzahl von Prädiktionsdatensätzen mit Prozessabweichungen und die ausgewählte Anzahl von Prädiktionsdatensätzen ohne Prozessabweichuna identisch sind.

Erfindungsgemäß ist vorgesehen, dass die Auswahl der Anzahl von Prädiktionsdatensätzen mit Prozessabweichung aufgrund des folgenden Kriteriums erfolgt:
- einem zeitlichen Mindestabstand zwischen zwei Prädiktionsdatensätzen mit Prozessabweichungen.

Bei einer Ausgestaltung des Verfahrens zur Vorhersage von Prozessabweichungen ist vorgesehen, dass die Auswahl der Anzahl von Prädiktionsdatensätzen mit Prozessabweichung aufgrund eines oder mehrerer der folgenden Kriterien erfolgt:
- einer automatischen Auswahl anhand von definierten Regeln;
- einer Auswahl durch einen Benutzer.

Ein zeitlicher Mindestabstand zwischen zwei Prädiktionsdatensätzen mit Prozessabweichungen beträgt beispielsweise mindestens ungefähr zwei Stunden.

Bei einer Ausgestaltung des Verfahrens zur Vorhersage von Prozessabweichungen ist vorgesehen, dass Prädiktionsdatensätze mit Prozessabweichungen als solche gekennzeichnet werden, wenn innerhalb eines vorgegebenen Zeitintervalls eine Prozessabweichung auftritt.

Ein vorgegebenes Zeitintervall besteht vorzugsweise aus einer Zeitspanne des Prädiktionsdatensatzes und einem gewählten Prädiktionshorizont.

Beispielsweise ist es denkbar, dass die Zeitspanne des Prädiktionsdatensatzes 30 Minuten beträgt und dass der gewählte Prädiktionshorizont 15 Minuten beträgt.

Ein Prädiktionsdatensatz ohne Prozessabweichungen wird als solcher gekennzeichnet, wenn innerhalb des vorgegebenen Zeitintervalls keine Prozessabweichung vorliegt.

Bei einer Ausgestaltung des Verfahrens zur Vorhersage von Prozessabweichungen ist vorgesehen, dass die über den vorgegebenen Zeitraum gespeicherten Prozesswerte und/oder Statusgrößen durch eine Vorverarbeitung in Prädiktionsdatensätze zusammengefasst werden.

Bei einer Ausgestaltung des Verfahrens zur Vorhersage von Prozessabweichungen ist vorgesehen, dass die Vorverarbeitung Folgendes umfasst:
- Regularisierung der über den vorgegebenen Zeitraum gespeicherten Prozesswerte;
- Zusammenfassung der Prozesswerte und/oder Statusgrößen in Prädiktionsdatensätze durch Einteilung der Prozesswerte und/oder Statusgrößen in Zeitfenster mit zeitlicher Verschiebung.

Vorzugsweise ist eine Zeitdauer eines Zeitfensters größer als die zeitliche Verschiebung.

Die Zeitdauer eines Zeitfensters beträgt beispielsweise 30 Minuten.

Die zeitliche Verschiebung beträgt beispielsweise 5 Minuten.

Vorzugsweise umfassen dabei zeitlich aufeinanderfolgende Prädiktionsdatensätze jeweils Prozesswerte und/oder Statusgrößen mit einer zeitlichen Überlappung, beispielsweise von 5 Minuten.

Die vorliegende Erfindung betrifft ferner ein Vorhersagesystem zur Vorhersage von Prozessabweichungen in einer verfahrenstechnischen Anlage, welches zur Durchführung des erfindungsgemäßen Verfahrens zur Vorhersage von Prozessabweichungen in einer verfahrenstechnischen Anlage, beispielsweise in einer Lackieranlage, ausgebildet und eingerichtet ist.

Die vorliegende Erfindung betrifft ferner ein industrielles Steuerungssystem, welches ein erfindungsgemäßes Vorhersagesystem umfasst.

Das erfindungsgemäße Verfahren zur Vorhersage von Prozessabweichungen weist vorzugsweise einzelne oder mehrere der im Zusammenhang mit dem Verfahren zur Fehleranalyse beschriebenen Merkmale und/oder Vorteile auf.

Das Verfahren zur Fehleranalyse weist vorzugsweise ferner einzelne oder mehrere der im Zusammenhang mit dem erfindungsgemäßen Verfahren zur Vorhersage von Prozessabweichungen beschriebenen Merkmale und/oder Vorteile auf.

Ferner sei für das Verständnis der vorliegenden Erfindung ein Verfahren zur Anomalie- und/oder Fehlererkennung in einer verfahrenstechnischen Anlage, beispielsweise in einer Lackieranlage, erwähnt.

Das Verfahren zur Anomalie- und/oder Fehlererkennung in einer verfahrenstechnischen Anlage, beispielsweise in einer Lackieranlage, umfasst vorzugsweise Folgendes:
- automatisches Erstellen eines Anomalie- und/oder Fehlermodells der verfahrenstechnischen Anlage, welches Informationen über die Auftretenswahrscheinlichkeit von Prozesswerten umfasst;
- automatisches Einlesen von Prozesswerten der verfahrenstechnischen Anlage im Betrieb derselben;
- automatische Erkennung einer Anomalie und/oder einer Fehlersituation durch Ermitteln einer Auftretenswahrscheinlichkeit mittels des Anomalie- und/oder Fehlermodells auf Basis der eingelesenen Prozesswerte der verfahrenstechnischen Anlage und durch Überprüfen der Auftretenswahrscheinlichkeit auf einen Grenzwert.

Vorzugsweise sind mittels des Verfahrens zur Anomalie- und/oder Fehlererkennung Fehlersituationen, das heißt Defekte und/oder Ausfälle an Bauteilen, Sensoren und/oder Aktoren, identifizierbar.

Vorzugsweise ist mit dem Verfahren zur Anomalie- und/oder Fehlererkennung in einer verfahrenstechnischen Anlage ein Normalzustand der verfahrenstechnischen Anlage automatisiert ermittelbar.

Mittels des Anomalie- und/oder Fehlermodells sind insbesondere statische und/oder dynamische Zusammenhänge in der verfahrenstechnischen Anlage beschreibbar.

Unter einer Anomalie wird im Rahmen dieser Beschreibung und der beigefügten Ansprüche insbesondere eine Abweichung eines Prozesswerts von einem Normalzustand verstanden.

Das Anomalie- und/oder Fehlermodell umfasst vorzugsweise einen Strukturgraphen.

Der Strukturgraph umfasst insbesondere mehrere Cliquen, wobei Zusammenhänge zwischen Knoten einer jeweiligen Clique vorzugsweise durch eine Wahrscheinlichkeitsdichtefunktion beschrieben werden.

Mittels jeweils einer Clique des Strukturgraphen werden vorzugsweise Zusammenhänge für Sensoren und/oder Aktoren der verfahrenstechnischen Anlage beschrieben.

Vorzugsweise wird eine Anomalie wird erkannt, wenn ein Grenzwert für die Auftretenswahrscheinlichkeit eines Prozesswerts in einer Clique eines Strukturgraphen des Anomalie- und/oder Fehlermodells unterschritten wird.

Günstig kann es sein, wenn eine erkannte Anomalie mit anomalen Prozessgrößen für einen Benutzer grafisch dargestellt wird.

Bei einer Ausgestaltung des Verfahrens zur Anomalie- und/oder Fehlererkennung ist vorgesehen, dass
- das Anomalie- und/oder Fehlermodell Strukturdaten umfasst, welche Informationen über eine Prozessstruktur in der verfahrenstechnischen Anlage enthalten, und/oder dass
- das Anomalie- und/oder Fehlermodell Parametrierungsdaten umfasst, welche Informationen über Zusammenhänge zwischen Prozesswerten der verfahrenstechnischen Anlage enthalten.

Die Strukturdaten umfassen insbesondere Informationen über Zusammenhänge zwischen Sensoren und/oder Aktoren in der verfahrenstechnischen Anlage.

Die Parametrierungsdaten umfassen insbesondere Informationen über die Auftretenswahrscheinlichkeit von Prozesswerten.

Insbesondere werden Strukturdaten und/oder Parametrierungsdaten zum Erstellen des Anomalie- und/oder Fehlermodells genutzt.

Bei einer Ausgestaltung des Verfahrens zur Anomalie- und/oder Fehlererkennung ist vorgesehen, dass zum Erstellen des Anomalie- und/oder Fehlermodells einer oder mehrere der folgenden Schritte durchgeführt werden:
- Strukturidentifikation zur Ermittlung einer Prozessstruktur der verfahrenstechnischen Anlage;
- Ermittlung von Kausalitäten in der ermittelten Prozessstruktur der verfahrenstechnischen Anlage;
- Strukturparametrierung der Zusammenhänge in der ermittelten Prozessstruktur der verfahrenstechnischen Anlage.

Das Anomalie- und/oder Fehlermodell umfasst vorzugsweise Strukturinformationen, Kausalitätsinformationen und/oder Strukturparametrierungsinformationen.

Vorzugsweise ist mittels der Strukturidentifikation die Strukturparametrierung erleichterbar.

Insbesondere ist mittels der Strukturidentifikation ein Parametrierungsaufwand und somit insbesondere ein Rechenaufwand für die Strukturparametrierung reduzierbar.

Bei einer Ausgestaltung des Verfahrens zur Anomalie- und/oder Fehlererkennung ist vorgesehen, dass bei der Strukturidentifikation zur Ermittlung einer Prozessstruktur der verfahrenstechnischen Anlage ein Strukturgraph ermittelt wird, welcher insbesondere Zusammenhänge in der verfahrenstechnischen Anlage abbildet.

Der Strukturgraph umfasst vorzugsweise mehrere Knoten und mehrere die Knoten paarweise miteinander verbindende Kanten.

Der Strukturgraph umfasst vorzugsweise mehrere Cliquen.

Günstig kann es sein, wenn mittels der Strukturidentifikation Zusammenhänge in dem ermittelten Strukturgraphen ermittelt werden.

Bei einer Ausgestaltung des Verfahrens zur Anomalie- und/oder Fehlererkennung ist vorgesehen, dass die Ermittlung des Strukturgraphen unter Verwendung eines oder mehrerer der folgenden erfolgt:
- eines maschinellen Lernverfahrens;
- Expertenwissen;
- bekannten Schaltplänen und/oder Verfahrensschemata;
- Bezeichnungen in einem Nummerierungssystem der verfahrenstechnischen Anlage.

Günstig kann es sein, wenn zur Strukturidentifikation, insbesondere zur Ermittlung des Strukturgraphen, eine Systematik aus einem Nummerierungssystems (sogenanntes "plant numbering system") in der verfahrenstechnischen Anlage verwendet wird, beispielsweise mittels einer Semantikanalyse.

Das Nummerierungssystem umfasst insbesondere Informationen über eine Funktionseinheit, beispielsweise über den Anlagentyp einer verfahrenstechnischen Anlage, Informationen über eine Funktionsgruppe der jeweiligen Funktionseinheit, Informationen über ein Funktionselement der jeweiligen Funktionsgruppe und/oder Informationen über einen Datentyp.

Vorzugsweise umfasst das Nummerierungssystem mehrere Ebenen.

Eine erste Ebene des Nummerierungssystems umfasst beispielsweise Informationen über eine jeweilige Funktionseinheit.

Eine zweite Ebene des Nummerierungssystems umfasst beispielsweise Informationen über eine jeweilige Funktionsgruppe.

Eine dritte Ebene des Nummerierungssystems umfasst beispielsweise Informationen über ein jeweiliges Funktionselement.

Eine vierte Ebene des Nummerierungssystems umfasst beispielsweise Informationen über einen jeweiligen Datentyp.

Vorzugsweise umfasst ein Nummerierungssystemdatensatz eindeutige Bezeichnungen der Funktionselemente der verfahrenstechnischen Anlage.

Beispielsweise umfasst eine eindeutige Bezeichnung eines Funktionselements Informationen zu der ersten, zweiten, dritten und/oder vierten Ebene.

Vorzugsweise wird bei der Semantikanalyse eine Extraktion von Informationen aus dem Nummerierungssystemdatensatz durchgeführt, beispielsweise basierend auf eindeutigen Bezeichnungen der Funktionselemente der verfahrenstechnischen Anlage.

Vorzugsweise werden bei der Semantikanalyse eine oder mehrere Stringsuchen in einem Nummerierungssystemdatensatz durchgeführt.

Insbesondere kann vorgesehen sein, dass dabei Informationen aus einem Nummerierungssystemdatensatz extrahiert werden.

Bei der Extraktion der Informationen wird insbesondere eine erste Stringsuche in dem Nummerierungssystemdatensatz durchgeführt, wobei insbesondere ein extrahierter Datensatz erhalten wird.

Aus dem Nummerierungssystemdatensatz extrahierte Informationen werden vorzugsweise für die Semantikanalyse kategorisiert.

Bei der Kategorisierung wird beispielsweise eine zweite Stringsuche in dem extrahierten Datensatz durchgeführt, welcher bei der Extraktion der Informationen erhalten wird.

Beispielsweise ist es denkbar, dass bei der Semantikanalyse, insbesondere bei einer oder mehreren Stringsuchen, identifizierbar ist, welche physikalische Größe mit einem Sensorelement gemessen wird.

Mittels der Semantikanalyse identifizierbare physikalische Größen sind beispielsweise folgende: thermodynamische Größen (Temperatur und/oder Feuchte); hydraulische Größen (Druck, Volumen und/oder Füllstand); mechanische Größen (Drehzahl, Drehmoment und/oder Drehposition); elektrische Größen (Frequenz, Spannung, Stromstärke und/oder elektrische Leistung).

Günstig kann es ferner sein, wenn bei der Semantikanalyse, insbesondere bei einer oder mehreren Stringsuchen, Statusgrößen identifizierbar sind.

Bei der Semantikanalyse identifizierbare Statusgrößen umfassen beispielsweise folgende Informationen: Informationen über einen Betriebszustand einer Befeuchterpumpe (an/aus); Informationen über einen manuellen Modus für Pumpen (an/aus); Informationen über einen Öffnungsstatus eines Versorgungsventils (offen/geschlossen); Informationen über einen Betriebszustand eines Ventilators (an/aus).

Die Ermittlung des Strukturgraphen mittels eines maschinellen Lernverfahrens erfolgt vorzugsweise unter Verwendung von Zusammenhangsmaßen, mittels welcher nichtlineare Zusammenhänge wiedergebbar sind, beispielsweise mittels Transinformation ("mutual information").

Unter Expertenwissen wird im Rahmen dieser Beschreibung und der beigefügten Ansprüche beispielsweise Wissen über Zusammenhänge zwischen Sensoren im Prozess verstanden.

Vorzugsweise sind Kanten zwischen Knoten des Strukturgraphen durch eine Vorkonfiguration des Strukturgraphen mittels Informationen aus Expertenwissen, bekannten Schaltplänen und/oder Verfahrensschemata ausschließbar. Insbesondere ist dabei ein Rechenaufwand für die Ermittlung des Strukturgraphen reduzierbar.

Prozesswerte werden vorzugsweise mittels des Nummerierungssystems ("plant numbering system") eindeutig bezeichnet.

Günstig kann es daher sein, wenn der Strukturgraph unter Verwendung der jeweils eindeutigen Bezeichnung der Prozesswerte ermittelt wird.

Insbesondere ist es denkbar, dass der mittels eines maschinellen Lernverfahrens ermittelte Strukturgraph mittels Expertenwissen, mittels bekannter Schaltpläne und/oder Verfahrensschemata und/oder mittels der Bezeichnungen in dem Nummerierungssystem der verfahrenstechnischen Anlage auf seine Plausibilität überprüft wird.

Bei einer Ausgestaltung des Verfahrens zur Anomalie- und/oder Fehlererkennung ist vorgesehen, dass die verfahrenstechnische Anlage zur Strukturidentifikation, insbesondere zur Ermittlung des Strukturgraphen, mit Testsignalen angeregt wird.

Vorzugsweise werden bei der Anregung mit Testsignalen gezielt Anomalien und/oder Fehlersituationen erzeugt.

Testsignale werden insbesondere unter Berücksichtigung von Auslegungsdaten erzeugt. Insbesondere sind aufgrund der Auslegungsdaten Grenzen für die Testsignale vorgebbar, beispielsweise ist bei der Vorgabe von Sprungfunktionen eine maximale Amplitude der Stellgrößensprünge vorgebbar.

Unter Auslegungsdaten werden im Rahmen dieser Beschreibung und der beigefügten Ansprüche insbesondere eine oder mehrere der folgenden Informationen verstanden:
- Sensortyp (Temperatursensor, Durchflusssensor, Ventilstellungssensor, Drucksensor etc.) und/oder Aktortyp (Ventil, Ventilator, Klappe, E-Motor);
- zulässige Wertebereiche von Sensoren und/oder Aktoren;
- Signaltyp von Sensor und/oder Aktor (float, integer).

Insbesondere wird die verfahrenstechnische Anlage mittels der Testsignale dynamisch angeregt.

Die Testsignale sind insbesondere Signale, mittels welcher Stellgrößen in der verfahrenstechnischen Anlage veränderbar sind. Beispielsweise werden mittels der Testsignale Stellgrößen von Ventilen und/oder Pumpen der verfahrenstechnischen Anlage verändert.

Bei einer Ausgestaltung des Verfahrens zur Anomalie- und/oder Fehlererkennung ist vorgesehen, dass die Ermittlung von Kausalitäten in der ermittelten Prozessstruktur der verfahrenstechnischen Anlage unter Verwendung eines oder mehrerer der folgenden erfolgt:
- bei der Anregung der verfahrenstechnischen Anlage mit Testsignalen generierte Systemeingangssignale und Systemausgangssignale;
- Expertenwissen;
- bekannte Schaltpläne und/oder Verfahrensschemata;
- Bezeichnungen in einem Nummerierungssystem der verfahrenstechnischen Anlage.

Kausalitäten in der ermittelten Prozessstruktur werden beispielsweise aus bei der Anregung der verfahrenstechnischen Anlage mit Testsignalen ermittelten Systemeingangssignalen und Systemausgangssignalen der verfahrenstechnischen Anlage abgeleitet, beispielsweise anhand des jeweiligen zeitlichen Verlaufs der Systemeingangssignale und der Systemausgangssignale.

Alternativ oder ergänzend dazu ist es denkbar, dass Kausalitäten aus bei der Anregung der verfahrenstechnischen Anlage mit Testsignalen ermittelten Systemeingangssignalen und Systemausgangssignalen mittels Verfahren zur kausalen Inferenz abgeleitet werden.

Unter Kausalitäten werden im Rahmen dieser Beschreibung und der beigefügten Ansprüche insbesondere Kausalitätsrichtungen, das heißt "Pfeilrichtungen", in dem ermittelten Strukturgraphen verstanden.

Vorzugsweise sind mittels der ermittelten Kausalitäten in der ermittelten Prozessstruktur beziehungsweise in dem ermittelten Strukturgraphen die für eine erkannte Anomalie ursächlichen Prozesswerte auffindbar.

Bei einer Ausgestaltung des Verfahrens zur Anomalie- und/oder Fehlererkennung ist vorgesehen, dass zur Strukturparametrierung der Zusammenhänge in der ermittelten Prozessstruktur der verfahrenstechnischen Anlage eines oder mehrere der folgenden verwendet werden:
- Verfahren zur Ermittlung von Wahrscheinlichkeitsdichtefunktionen, insbesondere Gaußsche Mischmodelle;
- bekannte physikalische Zusammenhänge zwischen Prozesswerten;
- physikalische Kennfelder von Funktionselementen der verfahrenstechnischen Anlage, beispielsweise Kennfelder von Ventilen.

Vorzugsweise erfolgt die Strukturparametrierung unter Verwendung von Verfahren zur Ermittlung von Wahrscheinlichkeitsdichtefunktionen, insbesondere unter Verwendung Gaußscher Mischmodelle.

Günstig kann es sein, wenn mittels physikalischer Kennfelder von Funktionselementen der verfahrenstechnischen Anlage Zusammenhänge zwischen zwei Größen des Funktionselements beschreibbar sind.

Mittels eines bekannten Ventilkennfelds eines Ventils ist beispielsweise ein Zusammenhang zwischen einer Ventilstellung und einem Volumenstrom beschreibbar.

Bei einer Ausgestaltung des Verfahrens zur Anomalie- und/oder Fehlererkennung ist vorgesehen, dass zur Strukturparametrierung unter Verwendung von Verfahren zur Ermittlung von Wahrscheinlichkeitsdichtefunktionen, insbesondere unter Verwendung Gaußscher Mischmodelle, Daten aus dem regulären Betrieb der verfahrenstechnischen Anlage und/oder durch eine Anregung der verfahrenstechnischen Anlage mittels Testsignalen gewonnene Daten verwendet werden.

Beispielsweise werden zur Strukturparametrierung unter Verwendung von Verfahren zur Ermittlung von Wahrscheinlichkeitsdichtefunktionen insbesondere in einer Datenbank gespeicherte Stell-, Mess- und/oder Regelgrößen verwendet.

Vorzugsweise werden zur Strukturparametrierung unter Verwendung von Verfahren zur Ermittlung von Wahrscheinlichkeitsdichtefunktionen Daten aus dem laufenden Betrieb der verfahrenstechnischen Anlage verwendet, welche über einen Zeitraum von mindestens 2 Wochen, vorzugsweise von mindestens 4 Wochen, beispielsweise von mindestens 8 Wochen, gespeichert werden.

Bei einer Ausgestaltung des Verfahrens zur Anomalie- und/oder Fehlererkennung ist vorgesehen, dass die zur Strukturparametrierung unter Verwendung von Verfahren zur Ermittlung von Wahrscheinlichkeitsdichtefunktionen, insbesondere unter Verwendung Gaußscher Mischmodelle, verwendeten Daten vor der Strukturparametrierung vorverarbeitet werden.

Bei der Vorverarbeitung werden vorzugsweise Daten aus dem regulären Betrieb der Anlage anhand von Alarmen und Statusbits, welche den Zustand der verfahrenstechnischen Anlage beschreiben, welche nicht betriebsbeziehungsweise produktionsbereiten Betriebszuständen der verfahrenstechnischen Anlage zugeordnet sind (beispielsweise abgeschaltete Anlage, Wartungsphasen, etc.) ausgeschlossen.

Günstig kann es ferner sein, wenn Daten aus dem regulären Betrieb der Anlage durch Filterung vorverarbeitet werden, beispielsweise mittels Tiefpassfiltern und/oder mittels Butterworthfiltern.

Vorzugsweise werden Daten aus dem regulären Betrieb auf eine einheitliche Zeitschrittweite interpoliert.

Bei einer Ausgestaltung des Verfahrens zur Anomalie- und/oder Fehlererkennung ist vorgesehen, dass bei der Erstellung des Anomalie- und/oder Fehlermodells ein Grenzwert für die Auftretenswahrscheinlichkeit eines Prozesswertes festgelegt wird, wobei eine Anomalie bei einer Unterschreitung des Grenzwertes erkannt wird.

Die Festlegung des Grenzwerts erfolgt vorzugsweise automatisiert.

Die Festlegung des Grenzwerts erfolgt vorzugsweise mittels eines nicht-linearen Optimierungsverfahrens, beispielsweise mittels des Nelder-Mead-Verfahrens.

Alternativ oder ergänzend dazu ist es denkbar, dass die Festlegung des Grenzwerts mittels Quantilen erfolgt.

Grenzwerte für die Auftretenswahrscheinlichkeit der Prozesswerte sind vorzugsweise optimierbar, beispielsweise durch Vorgabe einer "False-Positive-Rate".

Vorzugsweise werden die Grenzwerte nach der ersten Erstellung des Anomalie- und/oder Fehlermodells angepasst, insbesondere im Fall einer zu hohen Anzahl an Fehlalarmen.

Bei einer Ausgestaltung des Verfahrens zur Anomalie- und/oder Fehlererkennung ist vorgesehen, dass mittels des Verfahrens zur Anomalie- und/oder Fehlererkennung eine Fehlerursache einer erkannten Anomalie und/oder einer erkannten Fehlersituation identifiziert wird.

Insbesondere ist die Fehlerursache mittels des Strukturgraphen des Anomalie- und/oder Fehlermodells identifizierbar.

Vorzugsweise wird der Strukturgraph zur Identifikation der Anomalie und/oder der Fehlersituation und/oder zur Identifikation der Fehlerursache für einen Benutzer visualisiert.

Mittels des Strukturgraphen ist insbesondere eine "Root-Cause-Analyse" realisierbar. Insbesondere sind anomale Prozesswerte innerhalb einer Prozessstruktur der verfahrenstechnischen Anlage identifizierbar.

Vorzugsweise ist eine erkannte Anomalie durch einen Benutzer als Fehlersituation oder Fehlalarm kennzeichenbar.

Fehlersituationen werden insbesondere in einer Fehlerdatenbank gespeichert.

Bei einer Ausgestaltung des Verfahrens zur Anomalie- und/oder Fehlererkennung ist vorgesehen, dass die verfahrenstechnische Anlage eine oder mehrere der folgenden Behandlungsstationen einer Lackieranlage umfasst oder durch diese gebildet wird:
- Vorbehandlungsstation;
- Station zur kathodischen Tauchlackierung;
- Trocknerstationen;
- industrielle Zuluftanlage;
- Lackierroboter.

Ferner kann ein Anomalie- und/oder Fehlererkennungssystem zur Anomalie- und/oder Fehlererkennung vorgesehen sein, welches zur Durchführung des Verfahrens zur Anomalie- und/oder Fehlererkennung in einer verfahrenstechnischen Anlage, beispielsweise in einer Lackieranlage, ausgebildet und eingerichtet ist.

Das Anomalie- und/oder Fehlererkennungssystem bildet insbesondere ein Meldesystem, mittels welchem eine Fehlersituation in der verfahrenstechnischen Anlage automatisiert erkennbar ist.

Ferner kann ein industrielles Steuerungssystem vorgesehen sein, welches ein derartiges Anomalie- und/oder Fehlererkennungssystem umfasst.

Das Verfahren zur Anomalie- und/oder Fehlererkennung weist vorzugsweise einzelne oder mehrere der im Zusammenhang mit dem Verfahren zur Fehleranalyse und/oder dem erfindungsgemäßen Verfahren zur Vorhersage von Prozessabweichungen beschriebenen Merkmale und/oder Vorteile auf.

Das Verfahren zur Fehleranalyse und/oder das erfindungsgemäße Verfahren zur Vorhersage von Prozessabweichungen weisen vorzugsweise einzelne oder mehrere der im Zusammenhang mit dem Verfahren zur Anomalie- und/oder Fehlererkennung beschriebenen Merkmale und/oder Vorteile auf.

Weitere Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer verfahrenstechnischen Anlage und eines industriellen Steuerungssystems;
- Fig. 2: eine schematische Darstellung einer verfahrenstechnischen Anlage, insbesondere einer Lackieranlage;
- Fig. 3: eine schematische Darstellung einer industriellen Zuluftanlage;
- Fig. 4: die schematische Darstellung der industriellen Zuluftanlage aus Fig. 3 beim Auftreten einer Fehlersituation;
- Fig. 5: die schematische Darstellung der industriellen Zuluftanlage aus Fig. 3 beim Auftreten einer weiteren Fehlersituation;
- Fig. 6: die schematische Darstellung der industriellen Zuluftanlage aus Fig. 3 beim Auftreten einer weiteren Fehlersituation;
- Fig. 7: eine weitere schematische Darstellung einer industriellen Zuluftanlage;
- Fig. 8: die schematische Darstellung der industriellen Zuluftanlage aus Fig. 7 in einem Betriebszustand ohne Prozessabweichung;
- Fig. 9: die schematische Darstellung der industriellen Zuluftanlage aus Fig. 7 in einem Betriebszustand mit einer Prozessabweichung aufgrund von sich ändernden Umgebungsbedingungen;
- Fig. 10: die schematische Darstellung der industriellen Zuluftanlage aus Fig. 7 in einem Betriebszustand mit einer Prozessabweichung aufgrund des Einschaltens eines Wärmerückgewinnungssystems;
- Fig. 11: die schematische Darstellung der industriellen Zuluftanlage aus Fig. 7 in einem Betriebszustand mit einer Prozessabweichung aufgrund des Ausfalls eines Ventils;
- Fig. 12: eine schematische Darstellung von in Prädiktionsdatensätze zusammengefassten Prozesswerten;
- Fig. 13: eine schematische Darstellung der Prädiktionsdatensätze aus Fig. 12, welche als Prädiktionsdatensätze mit Prozessabweichungen und als Prädiktionsdatensätze ohne Prozessabweichung gekennzeichnet sind;
- Fig. 14: eine schematische Darstellung einer Vorbehandlungsstation;
- Fig. 15: eine schematische Darstellung von Verfahrensschritten zur Erstellung eines Anomalie- und/oder Fehlermodells der Vorbehandlungsstation;
- Fig. 16: eine schematische Darstellung eines Graphen mit einer aus der Vorbehandlungsstation aus Fig. 14 abgeleiteten Prozessstruktur;
- Fig. 17: eine Clique eines Faktorgraphen;
- Fig. 18: ein Modell eines funktionalen Zusammenhangs in der Clique aus Fig. 17; und
- Fig. 19: eine der Clique aus Fig. 17 entsprechende Clique, welche durch Zuweisung einer Fehlerursache um einen Knoten erweitert ist.

Gleiche oder funktional äquivalente Elemente sind in sämtliche Figuren mit denselben Bezugszeichen versehen.

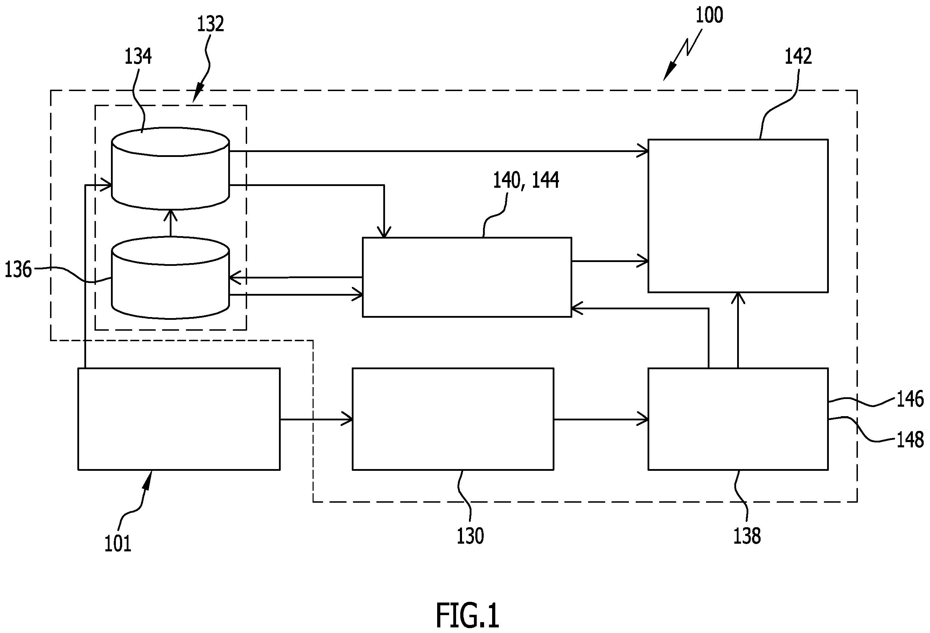

Fig. 1 zeigt ein als Ganzes mit 100 bezeichnetes industrielles Steuerungssystem für eine verfahrenstechnische Anlage 101.

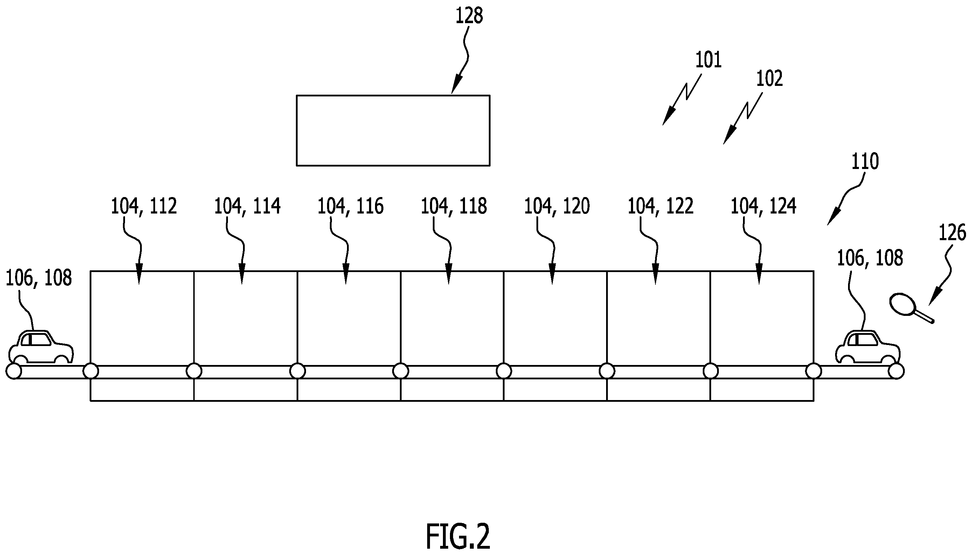

Die verfahrenstechnische Anlage 101 ist beispielsweise eine Lackieranlage 104, welche insbesondere in Fig. 2 dargestellt ist.

Anhand der Fig. 1 bis 6 wird insbesondere ein Verfahren zur Fehleranalyse in der verfahrenstechnischen Anlage 101, insbesondere in der Lackieranlage 102, erläutert.

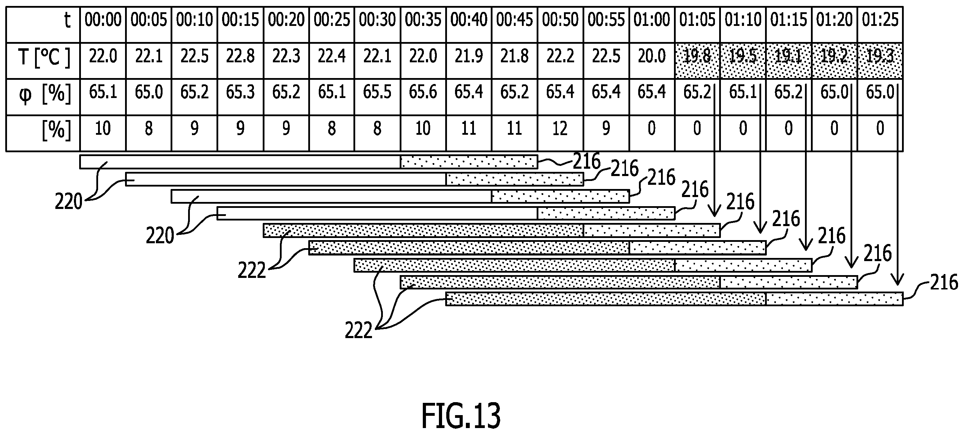

Anhand der Fig. 1, 2 und 7 bis 13 wird insbesondere ein Verfahren zur Vorhersage von Prozessabweichungen in der verfahrenstechnischen Anlage 101, insbesondere in der Lackieranlage 102, erläutert.

Anhand der Fig. 1, 2 und 14 bis 19 wird insbesondere ein Verfahren zur Anomalie- und/oder Fehlererkennung in der verfahrenstechnischen Anlage 101, insbesondere in der Lackieranlage 102, erläutert.

Die in Fig. 2 dargestellte verfahrenstechnische Anlage 101, insbesondere die Lackieranlage 102, umfasst vorzugsweise mehrere Behandlungsstationen 104 zur Behandlung von Werkstücken 106, insbesondere zur Behandlung von Fahrzeugkarosserien 108.

Die Behandlungsstationen 104 sind bei der in Fig. 2 dargestellten Ausführungsform der Lackieranlage 102 insbesondere miteinander verkettet und bilden daher eine Lackierlinie 110.

Zur Behandlung von Werkstücken 106, insbesondere zum Lackieren von Fahrzeugkarossieren 108, durchlaufen die Werkstücke 106 die Behandlungsstationen 104 vorzugsweise nacheinander.

Beispielsweise ist es denkbar, dass ein Werkstück 106 nacheinander folgende Behandlungsstationen 104 in der angegebenen Reihenfolge durchläuft.

Ein Werkstück 106 wird in einer Vorbehandlungsstation 112 vorbehandelt und von der Vorbehandlungsstation 112 zu einer Station zur kathodischen Tauchlackierung 114 gefördert.

Von der Station zur kathodischen Tauchlackierung 114 wird das Werkstück 106 nach Aufbringen einer Beschichtung auf dasselbe zu einer Trocknerstation 116 nach der Station zur kathodischen Tauchlackierung 114 gefördert.

Nach dem Trocknen der in der Station zu kathodischen Tauchlackierung 114 auf das Werkstück 106 aufgebrachten Beschichtung in der Trocknerstation 116 wird das Werkstück 106 vorzugsweise in eine Base-Coat-Kabine 118 gefördert, in welcher wiederum eine Beschichtung auf das Werkstück 106 aufgebracht wird.

Nach dem Aufbringen der Beschichtung in der Base-Coat-Kabine 118 wird das Werkstück 106 vorzugsweise in eine Base-Coat-Trocknerstation 120 gefördert.

Nach dem Trocknen der in der Base-Coat-Kabine 118 auf das Werkstück 106 aufgebrachten Beschichtung in der Base-Coat-Trocknerstation 120 wird das Werkstück 106 vorzugsweise in eine Clear-Coat-Kabine 122 gefördert, in welcher eine weitere Beschichtung auf das Werkstück 106 aufgebracht wird.

Nach dem Aufbringen der Beschichtung in der Clear-Coat-Kabine 122 wird das Werkstück 106 vorzugsweise einer Clear-Coat-Trocknerstation 124 zugeführt.

Nach dem Trocknen der in der Clear-Coat-Kabine 122 auf das Werkstück 106 aufgebrachten Beschichtung in der Clear-Coat-Trocknerstation 124 wird das Werkstück 106 vorzugsweise einer Kontrollstation 126 am Ende des Produktionsprozesses zugeführt.

In der Kontrollstation 126 wird vorzugsweise eine Qualitätskontrolle durch einen Qualitätsprüfer durchgeführt, beispielsweise mittels einer Sichtkontrolle.

Die verfahrenstechnische Anlage 101, insbesondere die Lackieranlage 102, umfasst vorzugsweise ferner eine industrielle Zuluftanlage 128 zur Konditionierung der Luft, welche beispielsweise der Base-Coat-Kabine 118 und/oder der Clear-Coat-Kabine 122 zugeführt wird.

Mittels der industriellen Zuluftanlage 128 ist vorzugsweise eine Temperatur und/oder eine relative Luftfeuchte der Luft, welche der Base-Coat-Kabine 118 und/oder der Clear-Coat-Kabine 122 zugeführt wird, einstellbar.

Mittels des industriellen Steuerungssystems 100 ist vorzugsweise ein Produktionsprozess, insbesondere ein Lackierprozess, in Behandlungsstationen 104 der verfahrenstechnischen Anlage 101, insbesondere der Lackieranlage 102, steuerbar.

Vorzugsweise umfasst das industrielle Steuerungssystem 100 dazu ein Prozesskontrollsystem 130.

Das in Fig. 1 dargestellte industrielle Steuerungssystem 100 umfasst vorzugsweise ferner eine Datenbank 132.

Die Datenbank 132 des industriellen Steuerungssystems 100 umfasst vorzugsweise eine Prozessdatenbank 134 und eine Fehlerdatenbank 136.

Günstig kann es ferner sein, wenn das industrielle Steuerungssystem 100 ein Meldesystem 138 und ein Analysesystem 140 umfasst.

Das industrielle Steuerungssystem 100 umfasst vorzugsweise ferner ein Visualisierungssystem 142, mittels welchem Informationen für einen Benutzer visualisierbar sind.

Vorzugsweise umfasst das Visualisierungssystem 142 dabei einen oder mehrere Bildschirme, auf welchen Informationen darstellbar sind.

Das Analysesystem 140 umfasst vorzugsweise ein Fehleranalysesystem 144 oder wird durch dieses gebildet.

Günstig kann es ferner sein, wenn das Meldesystem 138 ein Vorhersagesystem 146 zur Vorhersage von Prozessabweichungen in der verfahrenstechnischen Anlage 101 umfasst oder durch dieses gebildet wird.

Alternativ oder ergänzend dazu ist es denkbar, dass das Meldesystem 138 ein Anomalie- und/oder Fehlererkennungssystem 148 umfasst.

Das Fehleranalysesystem 144 ist insbesondere dazu eingerichtet und ausgebildet, das anhand der Fig. 1 bis 6 erläuterte Verfahren zur Fehleranalyse in der verfahrenstechnischen Anlage 101 durchzuführen.

Das Vorhersagesystem 146 ist insbesondere dazu eingerichtet und ausgebildet, das anhand der Fig. 1, 2 und 7 bis 13 erläuterte Verfahren zur Vorhersage von Prozessabweichungen in der verfahrenstechnischen Anlage 101 durchzuführen.

Das Anomalie- und/oder Fehlererkennungssystem 148 ist insbesondere dazu ausgebildet, dass anhand der Fig. 1, 2 und 14 bis 19 erläuterte Verfahren zur Anomalie- und/oder Fehlererkennung in der verfahrenstechnischen Anlage 101 durchzuführen.

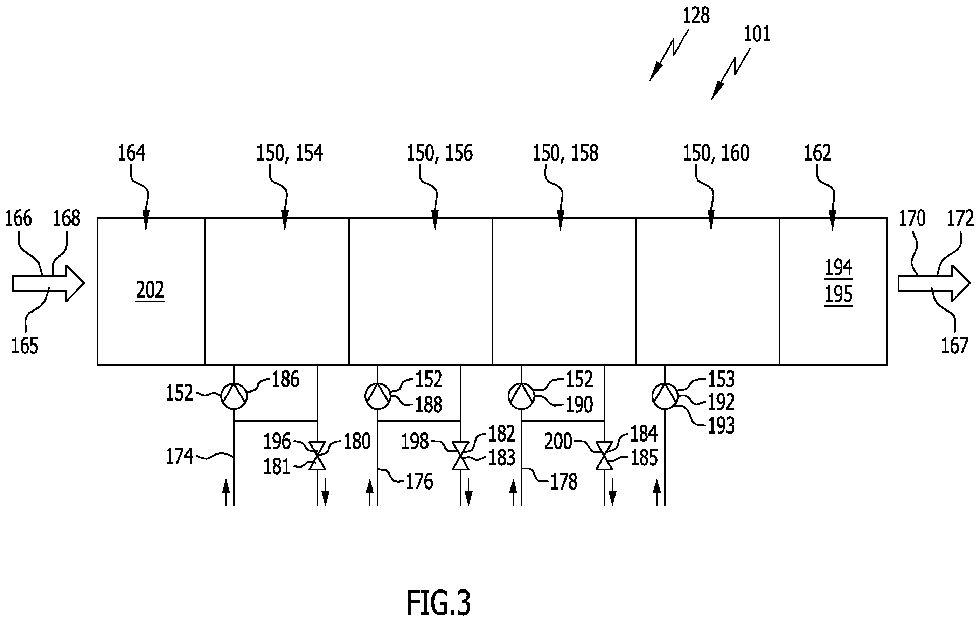

Die in den Fig. 3 bis 6 dargestellte industrielle Zuluftanlage 128 umfasst vorzugsweise mehrere Konditionierungsmodule 150, beispielsweise ein Vorheiz-Modul 154, ein Kühlmodul 156, ein Nachheiz-Modul 158 und/oder ein Befeuchtermodul 160.

Beispielsweise ist die industrielle Zuluftanlage 128 der Lackieranlage 102 eine Funktionseinheit, wobei ein Konditionierungsmodul 150 der Zuluftanlage 128 eine Funktionsgruppe ist und wobei eine Umlaufpumpe 152 der Zuluftanlage ein Funktionselement ist (vergl. Fig. 3 bis 6).

Zusätzlich zu den Umlaufpumpen 152 des Vorheiz-Moduls, des Kühlmoduls 156 und des Nachheiz-Moduls 158 umfasst die industrielle Zuluftanlage 128 vorzugsweise ferner eine Befeuchterpumpe 153 des Befeuchtermoduls 160.

Günstig kann es ferner sein, wenn die Zuluftanlage 128 einen Ventilator 162 umfasst.

Die Zuluftanlage 128 umfasst vorzugsweise ferner ein Wärmerückgewinnungssystem 164 zur Wärmerückgewinnung.

Der Zuluftanlage 128 ist vorzugsweise aus einer Umgebung derselben ein Luftstrom 165 zuführbar.

Ein mittels der Zuluftanlage 128 konditionierter Luftstrom 167 ist vorzugsweise der Base-Coat-Kabine 118 und/oder der Clear-Coat-Kabine 122 zuführbar.

Die Zuluftanlage umfasst vorzugsweise in den Figuren zeichnerisch nicht dargestellte Sensoren, mittels welcher Prozesswerte erfassbar sind.

Beispielsweise sind mittels der Sensoren die folgenden Prozesswerte erfassbar, welche in den Fig. 3 bis 6 vorzugsweise jeweils mittels eines Bezugszeichens gekennzeichnet sind:
- Außentemperatur 166;
- Außenfeuchte 168;
- Temperatur der mittels der industriellen Zuluftanlage konditionierten Luft 170;
- Feuchte der mittels der industriellen Zuluftanlage konditionierten Luft 172;
- Volumenströme 174, 176, 178 in den Konditionierungsmodulen 150;
- Ventilstellungen 180, 182, 184 von Ventilen 181, 183, 185 in den Konditionierungsmodulen 150.

Günstig kann es ferner sein, wenn eine Drehfrequenz 193 der Befeuchterpumpe 153 und eine Drehfrequenz 195 des Ventilators 194 erfasst werden.

Vorzugsweise werden die Prozesswerte 166 bis 184 in der Prozessdatenbank 134 abgespeichert.

Ferner kann vorgesehen sein, dass die folgenden Statusgrößen erfasst werden, welche in den Fig. 3 bis 6 vorzugsweise jeweils ebenfalls mittels eines Bezugszeichens gekennzeichnet sind:
- Pumpenstatus 186, 188, 190 der Umlaufpumpen 152 der Konditionierungsmodule 150 und Pumpenstatus 192 der Befeuchterpumpe 153 (an/aus);
- Ventilatorstatus 194 (an/aus);
- Ventilstatus 196, 198, 200 der Konditionierungsmodule 150 (geschlossen/geöffnet);
- Status 202 des Wärmerückgewinnungssystems 164 (an/aus).

Vorzugsweise werden auch die Statusgrößen 186 bis 202 in der Prozessdatenbank 134 gespeichert.

Das Verfahren zur Fehleranalyse in der verfahrenstechnischen Anlage 101 wird vorzugsweise nunmehr unter Bezug auf die Fig. 3 bis 6 erläutert.

Die industrielle Zuluftanlage 128 bildet hierbei insbesondere die verfahrenstechnische Anlage 101.

Im Folgenden werden verschiedene Beispielsituationen beschrieben, aus welchen die Funktionsweise des Fehleranalysesystems 144 ersichtlich ist.

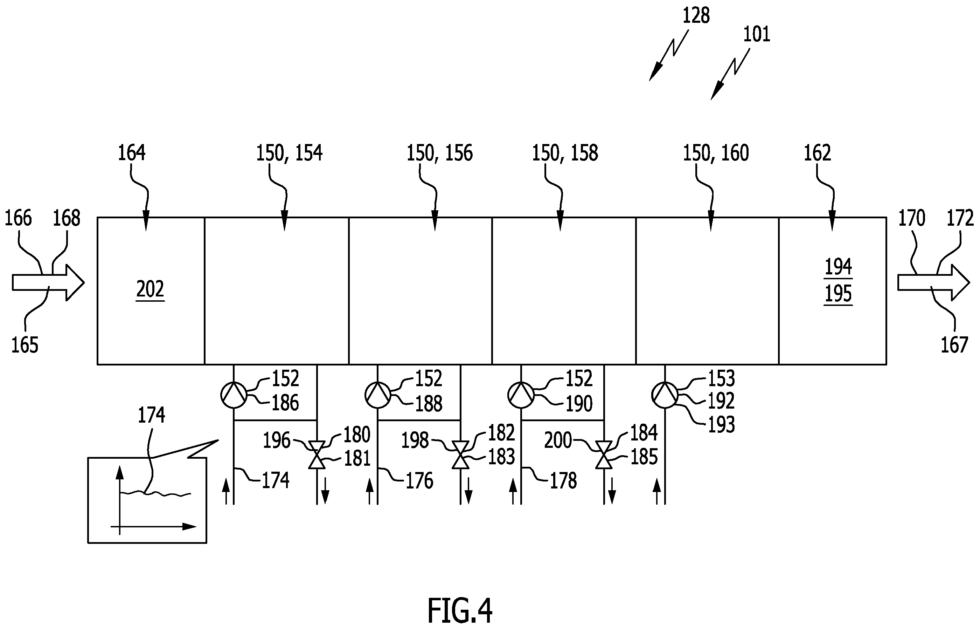

### Beispielsituation 1 (vergl. Fig. 4):

### (Ventilleckage)

Eine Ventilleckage am Vorheiz-Modul 154 tritt auf. Es wird ein Volumenstrom 174 > 0 gemessen. Der Pumpenstatus 186 ist "aus" und der Ventilstatus 196 des Regelventils ist "geschlossen".

Die Fehlersituation ist im Meldesystem als Logik (Pumpenstatus 186 = "aus"; Volumenstrom 174 > 0 und Ventilstatus 196 "geschlossen") hinterlegt. Das Meldesystem hat also die Prozess- und Statuswerte vorzugsweise als Vorverknüpfung gespeichert.

Die Fehleranalyseschritte beim Auftreten einer Meldung aufgrund der Ventilleckage sind vorzugsweise die folgenden:
1) Die Meldung wird einem Benutzer mittels des Visualisierungssystems 142, beispielsweise mittels eines Bildschirms des Visualisierungssystems 142, angezeigt.
2) Ein Benutzer möchte die Situation analysieren und öffnet ein Diagnosefenster.
3) Im Diagnosefenster werden dem Benutzer der mit der Meldung vorverknüpfte Prozesswert 174 sowie die Statusgrößen 186 und 196 angezeigt. Das Fehleranalysesystem 144 bekommt diese Information vorzugsweise direkt aus dem Meldesystem 138.
4) Eine Priorisierung der mit der Fehlersituation verknüpften Prozesswerte wird vorzugsweise nicht vorgenommen, da der Fehlersituation nur der Prozesswert 174 zugeordnet ist.
5) Der Benutzer speichert die Fehlersituation mit der Verknüpfung in der Fehlerdatenbank 136 ab.
6) Bei erneutem Auftreten der Fehlersituation "Ventilleckage" an dem gleichen oder vergleichbaren Ventil wird dem Benutzer vorzugsweise die vergleichbare Fehlersituation angezeigt.

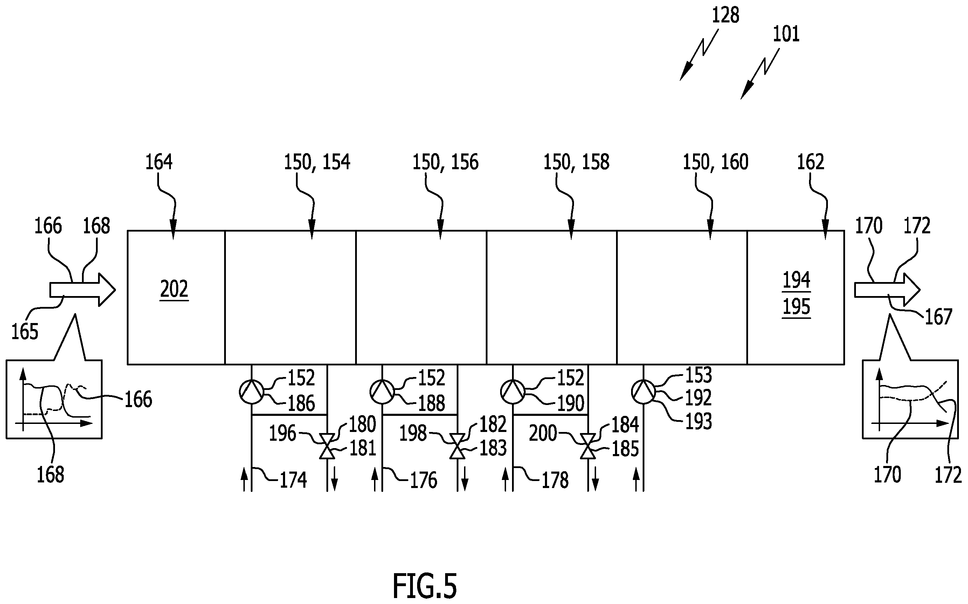

### Beispielsituation 2 (vergl. Fig. 5):

### (Überschreiten der Temperatur 170 der mittels der industriellen Zuluftanlage 128 konditionierten Luft aufgrund einer zu hohen Außentemperatur 166)

Die Temperatur 170 der mittels der industriellen Zuluftanlage 128 konditionierten Luft wird überschritten, da die Außentemperatur 166 sich außerhalb eines Auslegungsfensters der industriellen Zuluftanlage 128 befindet.

Die Meldung wird beim Verlassen eines vorgegebenen Prozessfensters der Temperatur 170 der mittels der industriellen Zuluftanlage 128 konditionierten Luft erzeugt und wird von dem Meldesystem 138 an das Visualisierungssystem 142 gemeldet.

Die Meldung ist mit dem Wert der Temperatur 170 der mittels der industriellen Zuluftanlage 128 konditionierten Luft verknüpft. Die Meldung ist jedoch nicht mit der Außentemperatur 166 verknüpft.

Die Fehleranalyseschritte beim Auftreten der Meldung aufgrund der Temperaturänderung sind vorzugsweise die folgenden:
1) Die Meldung wird einem Benutzer mittels des Visualisierungssystems 142, beispielsweise mittels eines Bildschirms des Visualisierungssystems 142, angezeigt.
2) Ein Benutzer möchte die Situation analysieren und öffnet ein Diagnosefenster.
3) Im Diagnosefenster wird dem Benutzer der mit der Meldung verknüpfte Prozesswert 170 angezeigt.
4) Eine Priorisierung der mit der Fehlersituation verknüpften Prozesswerte wird vorzugsweise nicht vorgenommen, da der Fehlersituation nur der Prozesswert 166 zugeordnet ist.
5) Zusätzlich werden dem Benutzer vorzugsweise folgende Prozesswerte vorgeschlagen:
   - Feuchte der mittels der industriellen Zuluftanlage konditionierten Luft 172 (prozesskritische Größe, zeigt Anomalie im Verhalten);
   - Außentemperatur 166 (zeigt Anomalie im Verhalten);
   - Außenfeuchte 168 (zeigt Anomalie im Verhalten).
6) Der Benutzer wählt die vorgeschlagenen Prozesswerte aus und fügt sie der Fehlersituation hinzu.
7) Der Benutzer kann die Ursache der Temperaturabweichung aus dem Analysesystem 140, insbesondere aus dem Fehleranalysesystem 144, direkt erfassen, da ihm die relevanten Prozesswerte vorgeschlagen werden.
8) Der Benutzer fügt eine Dokumentation zu der Fehlersituation mit einem Fehlerbehebungsvorschlag hinzu.
9) Der Benutzer speichert die Fehlersituation mit der Verknüpfung und den Dokumenten in der Fehlerdatenbank ab.
10) Das Fehleranalysesystem 144 erfasst vorzugsweise neben einer Fehler-ID, einer Fehlerklassifikation (Temperaturerhöhung), einem Fehlerort (Ausblasteil der industriellen Zuluftanlage 128) auch Referenzen (IDs) der Prozessgrößen 170, 172, 166, 168 in der priorisierten Reihenfolge und eine Menge von Merkmalen (z.B. Mittelwerte, Minimum, Maximum, Streuung der Prozessgrößen während des Auftretens der Fehlersituation) sowie die Zeitdauer vom Auftreten der Fehlersituation bis zum Speicherzeitpunkt beziehungsweise Ende der Fehlersituation.

### Beispielsituation 3 (vergl. Fig. 5):

### (Überschreiten der Temperatur 170 der mittels der industriellen Zuluftanlage konditionierten Luft aufgrund einer zu hohen Außentemperatur)

Die Temperatur 170 der mittels der industriellen Zuluftanlage konditionierten Luft wird erneut überschritten aufgrund der Außentemperatur. Das Fehlerbild ist ähnlich zur Beispielsituation 2.

Die Analyseschritte beim Auftreten der Meldung aufgrund der Temperaturänderung sind vorzugsweise die folgenden:
1) Die Meldung wird einem Benutzer mittels des Visualisierungssystems 142, beispielsweise mittels eines Bildschirms des Visualisierungssystems 142, angezeigt.
2) Der Benutzer möchte die Fehlersituation analysieren und öffnet ein Diagnosefenster.
3) Im Diagnosefenster werden dem Benutzer die mit der Meldung verknüpften Prozesswerte: 170, 172, 166, 168 in beschriebener Reihenfolge angezeigt.
4) Eine Prozessliste und deren Priorisierung ergeben sich aus einer ähnlichen Fehlersituation. Die Ähnlichkeit zur Fehlersituation aus Beispielsituation 2 wird vom Fehleranalysesystem 144 über einen metrischen Abgleich der Prozesswerte bestimmt.
5) Die ähnliche Fehlersituation wird dem Benutzer angezeigt
6) Der Benutzer kann die Verläufe der Prozesswerte in der gezeigten priorisierten Reihenfolge sowie die Dokumente der ihm gezeigten ähnlichen Fehlersituation zur Lösungsfindung nutzen.
7) Der Benutzer speichert die Fehlersituation ab.

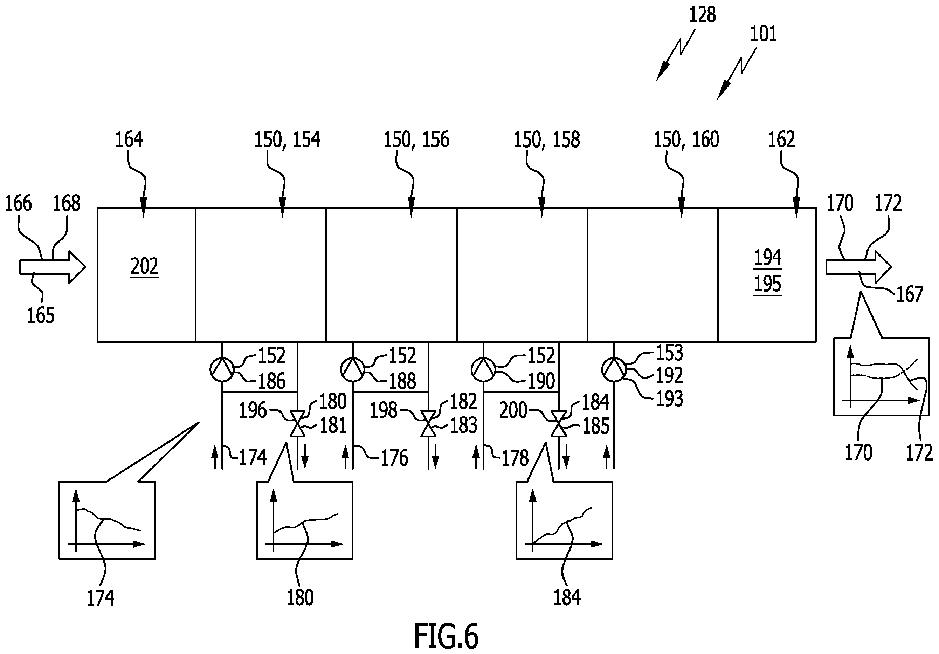

### Beispielsituation 4 (vergl. Fig. 6):

### (Störung in einem Versorgungssystem)

Einem Brenner im Vorheiz-Modul 154 wird zu wenig Brenngas zugeführt. Der Volumenstrom 174 sinkt.

Um mehr Brenngas zu erhalten, wird das Ventil 181 des Vorheiz-Moduls 154 weiter geöffnet, die Ventilstellung 180 ändert sich.

Auch das Ventil 185 des Nachheiz-Moduls 158 öffnet, um die Störung des Vorheiz-Moduls 154 zu kompensieren. Die Ventilstellung 184 ändert sich.

Die Störung kann aufgrund der niedrigen Außentemperatur 166 nicht kompensiert werden und die Temperatur 170 der mittels der industriellen Zuluftanlage konditionierten Luft bricht ein.

Die Analyseschritte beim Auftreten der Meldung aufgrund der Störung im Versorgungssystem sind vorzugsweise die folgenden:
1) Die Meldung wird einem Benutzer mittels des Visualisierungssystems 142, beispielsweise mittels eines Bildschirms des Visualisierungssystems 142, angezeigt.
2) Der Benutzer möchte die Fehlersituation analysieren und öffnet ein Diagnosefenster.
3) Im Diagnosefenster wird dem Benutzer aufgrund der Vorpriorisierung im Meldesystem 138 der mit der Meldung verknüpfte Prozesswert 170 angezeigt.
4) Eine Priorisierung findet nicht statt.
5) Es werden folgende Prozesswerte vorgeschlagen:
   - Feuchte der mittels der industriellen Zuluftanlage konditionierten Luft 172 (prozesskritische Größe, zeigt Anomalie im Verhalten);
   - Volumenstrom 174, Ventilstellung 180, Ventilstellung 186 (abhängig von der Abweichung vom Normalzustand).
6) Die Fehlersituationen aus den Beispielsituationen 2 und 3 werden nicht als ähnlich eingestuft (unterschiedliches Signalverhalten, da hoher metrischer Abstand der Prozesswerte).
7) Die vorgeschlagenen Prozesswerte können der Fehlersituation hinzugefügt und in der Fehlerdatenbank abgespeichert werden.

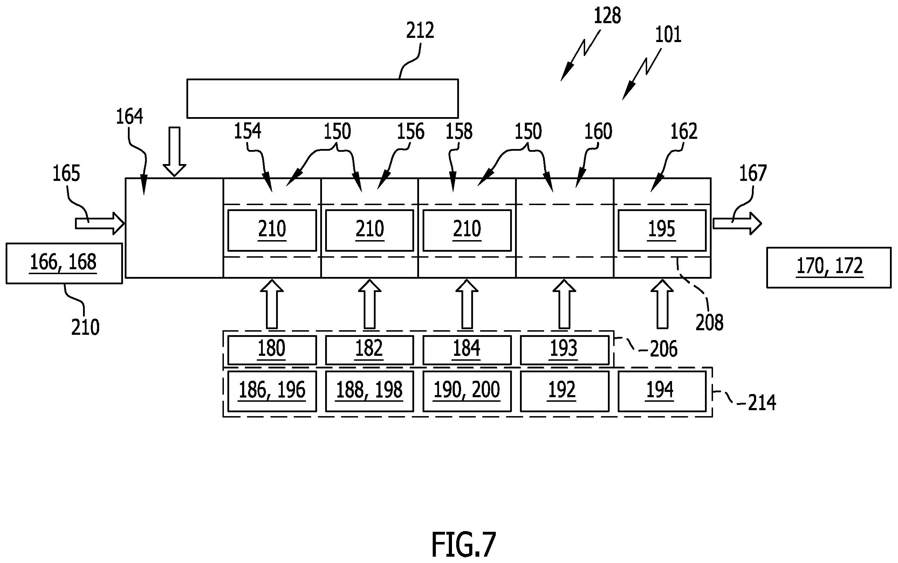

Das Verfahren zur Vorhersage von Prozessabweichungen in der verfahrenstechnischen Anlage **101** wird vorzugsweise nunmehr unter Bezug auf die Fig. 7 bis 13 erläutert.

Wenn die verfahrenstechnische Anlage 101 eine industrielle Zuluftanlage 128 ist, umfassen gespeicherte Prozesswerte und/oder Statusgrößen vorzugsweise Folgendes (vergl. Fig. 7):
- Zielgrößen 204 der industriellen Zuluftanlage 128, insbesondere Temperatur 170 und relative Luftfeuchte 172 der mittels der industriellen Zuluftanlage 128 konditionierten Luft, insbesondere an einem Ausblasteil der industriellen Zuluftanlage 128;
- Stellgrößen 206, insbesondere Ventilstellungen 180, 182, 184 von Ventilen von Heiz- und/oder Kühlmodulen 154, 156, 158 der industriellen Zuluftanlage 128, Drehfrequenzen 193 von Pumpen 152, insbesondere der Befeuchterpumpe 153, und/oder Drehfrequenzen 195 von Ventilatoren 162;
- interne Größen 208, insbesondere Vor- und/oder Rücklauftemperaturen 210 in den Heiz- und/oder Kühlmodulen 154, 156, 158 der industriellen Zuluftanlage 128 und/oder Luftkonditionen zwischen Konditionierungsmodulen 150;
- gemessene Störgrößen 210, insbesondere Außentemperatur 166 und/oder relative Außenluftfeuchte 168 an einem Einblasteil der industriellen Zuluftanlage 128;
- ungemessene Störgrößen 212; und/oder
- Statusgrößen 214, insbesondere Befeuchterpumpe 153 (an/aus); manueller Modus für Pumpen 152, 153 (an/aus); Versorgungsventile 181, 183, 185, Ventilator 162 (an/aus).

Im Folgenden werden verschiedene beispielhafte Betriebszustände beschrieben, aus welchen die Funktionsweise des Vorhersagesystems 146 ersichtlich ist.

### Beispielhafter Betriebszustand 1 :

### (ohne Abweichung)

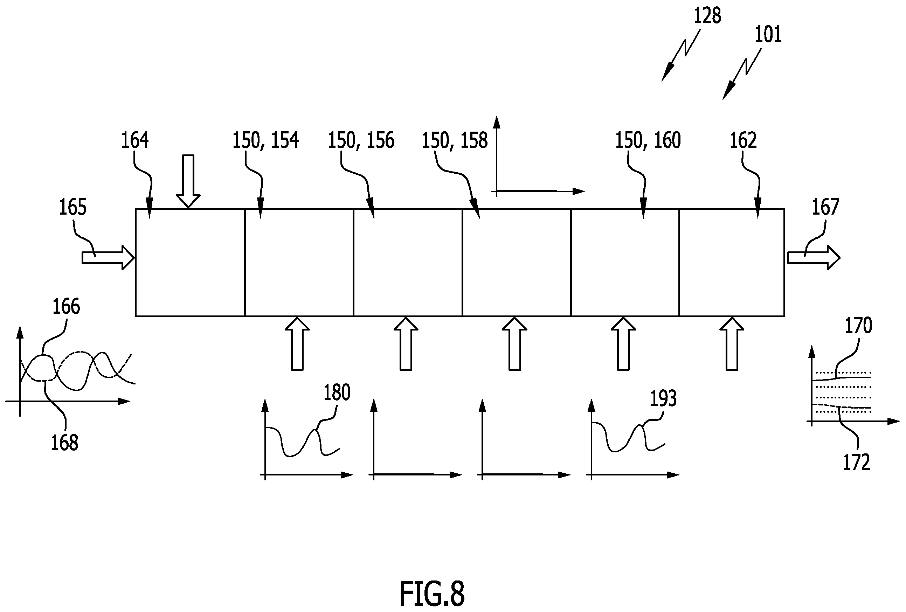

Fig. 8 zeigt einen ersten beispielhaften Betriebszustand der industriellen Zuluftanlage 128 ohne Prozessabweichung. Der erste beispielhafte Betriebszustand stellt somit vorzugsweise einen Positiv-Fall dar.

Die Außentemperatur 166 und Außenfeuchte 168 sind nicht konstant. Das Vorheiz-Modul 154 und das Befeuchtermodul 160 sind aktiv.

Ein Regelsystem der industriellen Zuluftanlage 128 hält die Temperatur 170 und die relative Luftfeuchte 172 der mittels der industriellen Zuluftanlage 128 konditionierten Luft auf einem konstanten Wert.

Gemäß den Statusgrößen 214 (Ventilator 162= "an" und Ventil- und Pumpenmodus = "Automatik") ist die industrielle Zuluftanlage 128 betriebsbereit.

Aufgrund der konstanten Temperatur 170 und relativen Luftfeuchte 172 der mittels der industriellen Zuluftanlage 128 konditionierten Luft ist die industrielle Zuluftanlage 128 vorzugsweise ferner produktionsbereit.

### Beispielhafter Betriebszustand 2:

### (Erhöhung der Außentemperatur 166 unter Abnahme der relativen Außenfeuchte 168 oberhalb der Auslegungsparameter; Einfluss einer gemessenen Störgröße 210 auf Zielgröße 204)

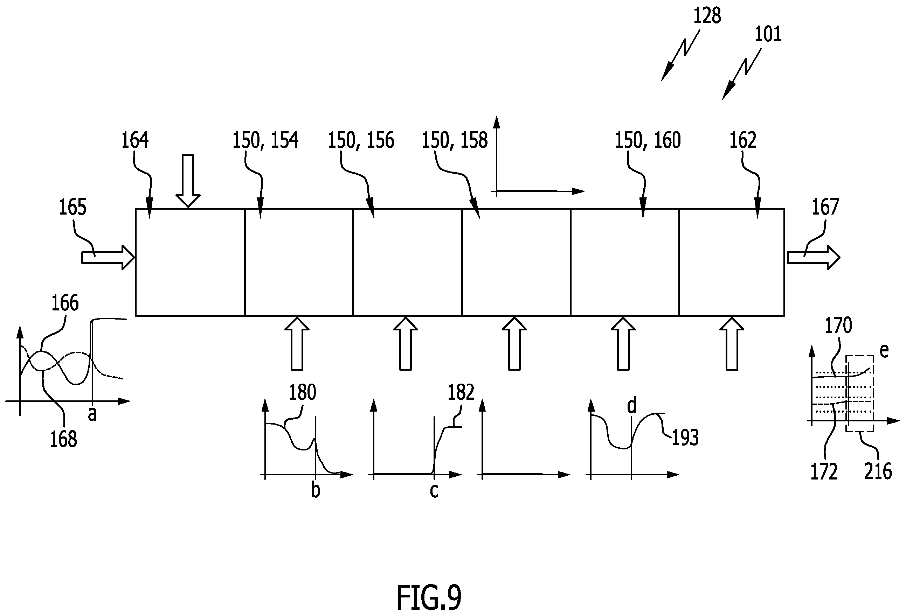

Fig. 9 zeigt einen zweiten beispielhaften Betriebszustand der industriellen Zuluftanlage 128 bei einer Erhöhung der Außentemperatur 166 unter Abnahme der relativen Außenfeuchte 168 durch einen Wetterumschwung.

Die Prozesswerte zeigen folgendes Verhalten:
a) Die erhöhte Außentemperatur 166 nach dem Wetterumschwung ist außerhalb der Auslegungsparameter.
b) Die Leistung des bisher aktiven Vorheizers-Moduls 154 wird von der Regelung reduziert.
c) Da die Reduktion der Heizleistung nicht ausreicht wird von der Regelung das Ventil 183 des Kühlmoduls 156 geöffnet und damit die Kühlleistung erhöht.
d) Die Drehfrequenz 193 der Befeuchterpumpe 153 wird von der Regelung erhöht, um die abnehmende Außenfeuchte 168 auszugleichen.
e) Da die Kühlleistung aufgrund der zu geringen Auslegung des Kühlmoduls 156 nicht ausreicht, kommt es zu einer Abweichung der Temperatur 170 der mittels der industriellen Zuluftanlage 128 konditionierten Luft.

Das Verlassen des vorgegebenen Prozessfensters für die Temperatur 170 ist aufgrund der Trägheit der industrielle Zuluftanlage 128 und der Kompensation der Regelung verzögert.

### Beispielhafter Betriebszustand 3:

### (Umstellung auf Winterbetrieb mit Wärmerückgewinnung; Einfluss einer ungemessenen Störgröße 212 auf Zielgröße 204)

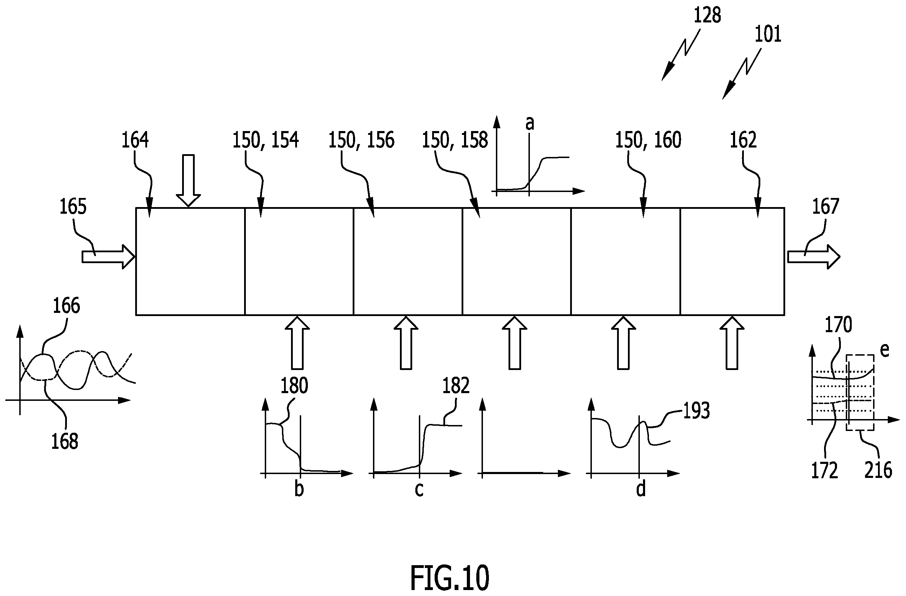

Fig. 10 zeigt einen dritten beispielhaften Betriebszustand der industriellen Zuluftanlage 128 bei einem Zuschalten des Wärmerückgewinnungssystems 164, welches den Luftstrom 165 bei kalten klimatischen Verhältnissen aus Abwärme erwärmt.

Die Zuschaltung des Wärmerückgewinnungssystems 164 erfolgt durch ein manuelles Ventil, weshalb der Einfluss der Wärmerückgewinnung durch das des Wärmerückgewinnungssystem 164 nicht messbar ist (ungemessene Störgröße 212).

Die Prozesswerte zeigen folgendes Verhalten:
a) Die Heizleistung des Wärmerückgewinnungssystems 164 wird erhöht, der Wert ist nicht messbar.
b) Das Ventil 181 des Vorheiz-Moduls 154 schließt aufgrund der Erhöhung der Heizleistung.
c) Im Kühlmodul 156 öffnet das Ventil 183, um durch zusätzliche Kühlleistung die Temperatur zu halten.
d) Die Drehfrequenz 193 der Befeuchterpumpe 153 wird von der Regelung so angepasst, dass die Luftfeuchte 172 der mittels der industriellen Zuluftanlage 128 konditionierten Luft gehalten wird.
e) Es kommt zu einer Abweichung der Temperatur 170 der mittels der industriellen Zuluftanlage 128 konditionierten Luft, da das Kühlmodul 156 die Wärmezufuhr nicht schnell genug kompensieren kann. Die Abweichung erfolgt aufgrund der Trägheit der industriellen Zuluftanlage 128 und der Kompensation der Regelung verzögert.

### Beispielhafter Betriebszustand 4:

### (Ausfall des Ventils 181 des Vorheizer-Moduls 154)

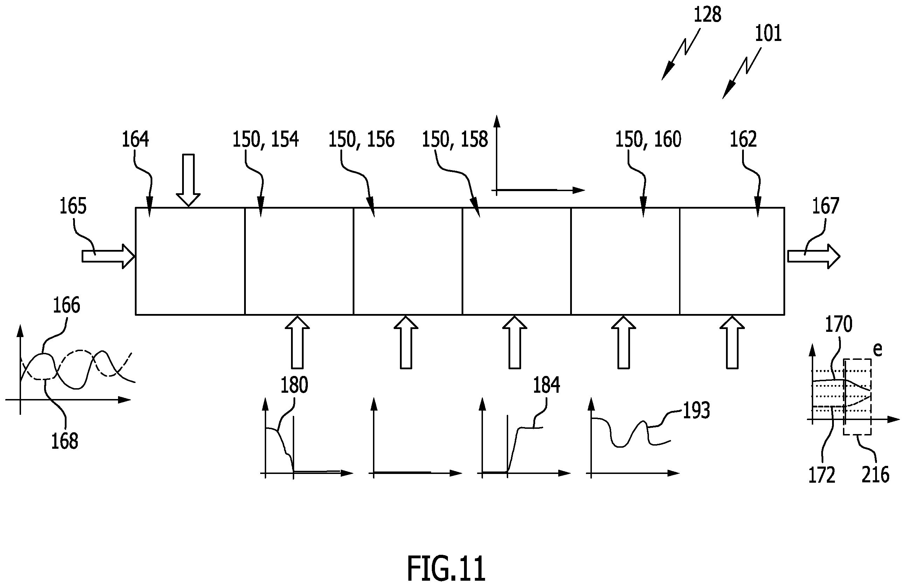

Fig. **11** zeigt einen vierten beispielhaften Betriebszustand der industriellen Zuluftanlage 128 mit einem Ausfall des Ventils 181 des Vorheiz-Moduls 154.

Die Prozesswerte zeigen folgendes Verhalten:
a) Das Ventil 181 des Vorheiz-Moduls 154 schließt aufgrund eines Gerätefehlers, wodurch sich die Heizleistung verringert.
b) Das Ventil 185 des Nachheiz-Moduls 158 öffnet, um die fehlende Heizleistung zu kompensieren.
c) Da die Heizleistung des Nachheiz-Moduls 158 nicht ausreicht, kommt es zu einer Abweichung der Temperatur 170 der mittels der industriellen Zuluftanlage 128 konditionierten Luft.

Das Verfahren zur Vorhersage von Prozessabweichungen in der verfahrenstechnischen Anlage 101, insbesondere in der industriellen Zuluftanlage, wird im Folgenden mit Hinblick auf die oben beschriebenen Betriebszustände 1 bis 4 erläutert.

Vorzugsweise sind die Betriebszustände 2 bis 4 mit Prozessabweichungen im Betrieb der industriellen Zuluftanlage 128 mittels des Verfahrens zur Vorhersage von Prozessabweichungen mit einem Prädiktionshorizont 216 von beispielsweise ungefähr 15 Minuten vorhersagbar.

Als Datengrundlage für das Training eines Vorhersagemodells wird eine Zeitspanne betrachtet, in welcher die industrielle Zuluftanlage 128 im Normalfall (>80%) in einsatzbereitem Betriebszustand (vergl. beispielhafter Betriebszustand 1) läuft.

Die aufgezeichneten Daten enthalten die beispielhaften Betriebszustände 2 bis 4 vorzugsweise jeweils mehrmals. Diese können im laufenden Betrieb aufgetreten oder alternativ absichtlich herbeigeführt worden sein, beispielsweise durch Schließen eines Ventils 181, 183, 185.

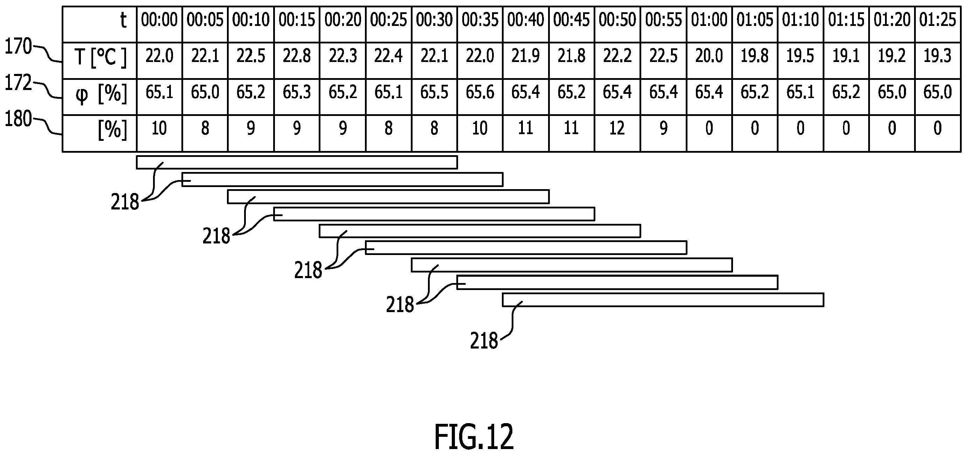

Die Daten werden vorzugsweise anschließend vorverarbeitet und regularisiert, was beispielsweise Fig. 12 zu entnehmen ist. Dort sind beispielhaft die Ventilstellung 180 des Ventils 181 des Vorheiz-Moduls 154 sowie die Temperatur 170 und relative Luftfeuchte 172 der mittels der industriellen Zuluftanlage 128 konditionierten Luft aufgetragen.

Die regularisierten Daten werden beispielsweise in 30 Minuten Zeitfenster 218 eingeteilt, jeweils mit einer zeitlichen Verschiebung von beispielsweise 5 Minuten.

Die in Zeitfenster 218 regularisierten Daten bilden insbesondere Prädiktionsdatensätze, insbesondere Prädiktionsdatensätze ohne Prozessabweichungen 220 und Prädiktionsdatensätze mit Prozessabweichung 222 (vergl. Fig. 7).

Für die Prädiktionsdatensätze mit Prozessabweichung 222 wird anhand der Statusgrößen 214 geprüft, ob die verfahrenstechnische Anlage 101 betriebsbereit war (beispielsweise Ventilator 162 "an", Konditionierungsmodule 150 im Automatikbetrieb).
- Falls nein: entsprechende Prädiktionsdatensätze mit Prozessabweichung 222 werden verworfen und nicht zum Training des Vorhersagemodells verwendet.
- Falls ja: entsprechende Prädiktionsdatensätze mit Prozessabweichung 222 kommen für das Training des Vorhersagemodells in Frage.

Aufgrund eines zeitlichen Mindestabstands von beispielsweise einer Stunde wird in Fig. 7 nur ein Prädiktionsdatensatz mit Prozessabweichung 222 ausgewählt.

Eine Auswahl der Prädiktionsdatensätze ohne Prozessabweichungen 220 erfolgt vorzugsweise analog zur Auswahl der Prädiktionsdatensätze mit Prozessabweichung 222.

Bei einem zeitlichen Mindestabstand von beispielsweise einer Stunde wird nur ein Prädiktionsdatensatz ohne Prozessabweichungen 220 für das Training des Vorhersagemodells ausgewählt.

Aus den ausgewählten Prädiktionsdatensätzen ohne Prozessabweichungen 220 und aus den ausgewählten Prädiktionsdatensätzen mit Prozessabweichungen 222 werden anschließend vorzugsweise Features extrahiert.

Zur Extraktion der Features werden beispielsweise statistische Kennzahlen, beispielsweise Minimum, Maximum, Median, Mittelwert und/oder die Standardabweichung, verwendet. Günstig kann es ferner sein, wenn zur Extraktion der Features lineare Regressionskoeffizienten verwendet werden.

Das Training des Vorhersagemodells erfolgt vorzugsweise auf Basis der extrahierten Features der ausgewählten Prädiktionsdatensätze ohne Prozessabweichungen 220 und auf Basis der ausgewählten Prädiktionsdatensätze mit Prozessabweichungen 222, insbesondere mittels eines maschinellen Lernverfahrens, beispielsweise mittels Gradient Boosting.

Mittels des trainierten Vorhersagemodells werden vorzugsweise Prozessabweichungen von produktionskritischen Prozesswerten in der industriellen Zuluftanlagen 128 vorhergesagt auf Basis von sich ändernden Prozesswerten während einem Betrieb der industriellen Zuluftanlage 128.

Das Vorhersagemodell wird insbesondere anhand der beispielhaften Betriebszustände 2 bis 4 erläutert:

### Beispielhafter Betriebszustand 2:

Das Vorhersagemodell sagt nach Eintritt der Temperaturerhöhung eine Prozessabweichung voraus. Grundlage hierfür sind die gemessenen Störgrößen 210, insbesondere Außentemperatur 166 und die Außenfeuchte 168, die Reaktion der Konditionierungsmodule 150 sowie der Verlauf der Temperatur 170 der mittels der industriellen Zuluftanlage 128 konditionierten Luft am Ausblasteil.

### Beispielhafter Betriebszustand 3:

Das Vorhersagemodell sagt nach Einschalten der Wärmerückgewinnungssystems eine Temperaturerhöhung der Temperatur 170 der mittels der industriellen Zuluftanlage 128 konditionierten Luft voraus. Grundlage sind die Reaktion der Konditionierungsmodule 150 sowie der Verlauf der Temperatur 170 der mittels der industriellen Zuluftanlage 128 konditionierten Luft am Ausblasteil.

### Beispielhafter Betriebszustand 4:

Das Vorhersagemodell sagt die Temperaturerhöhung der Temperatur 170 der mittels der industriellen Zuluftanlage 128 konditionierten Luft auf der Basis der Wetterbedingungen und der Ventilstellung 180 des Ventils 181 des Vorheiz-Moduls 156 voraus.

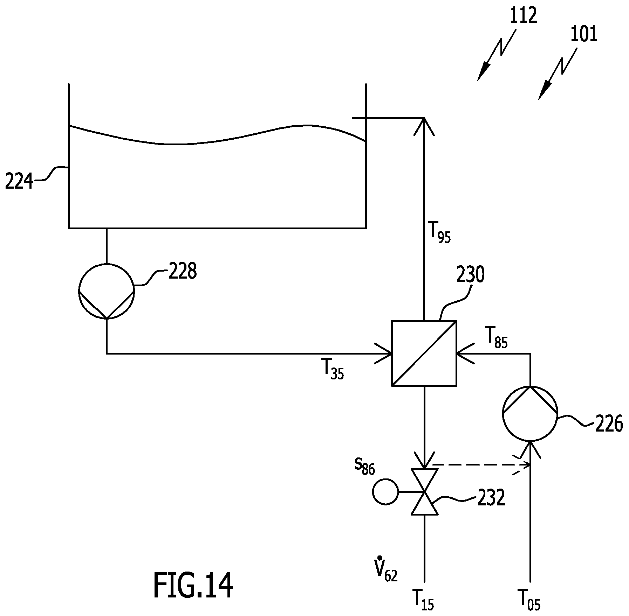

Das Verfahren zur Anomalie- und/oder Fehlerkennung in der verfahrenstechnischen Anlage 101 wird vorzugsweise nunmehr unter Bezug auf die Fig. 14 bis 19 erläutert.

Mittels des Verfahrens zur Anomalie- und/oder Fehlererkennung sind vorzugsweise Fehlersituationen, insbesondere Defekte und/oder Ausfälle an Bauteilen, Sensoren und/oder Aktoren, identifizierbar.

Die Vorbehandlungsstation 112 bildet hierbei beispielsweise die verfahrenstechnische Anlage 101.

Die Vorbehandlungsstation 112 umfasst vorzugsweise ein Vorbehandlungsbecken 224, in welchem Werkstücke 106, vorzugsweise Fahrzeugkarosserien 108, vorbehandelbar sind.

Die Vorbehandlungsstation 112 umfasst vorzugsweise ferner eine erste Pumpe 226, eine zweite Pumpe 228, einen Wärmetauscher 230 und ein Ventil 232.

Die Prozesswerte V62Punkt, S86, T95, T85, T15 sowie T05 erhalten ihre Bezeichnung aufgrund einer eindeutigen Bezeichnung in einem Nummerierungssystem der verfahrenstechnischen Anlage 101.

Die Prozesswerte T95, T85, T15 und T05 stellen insbesondere Temperaturen innerhalb der verfahrenstechnischen Anlage 101, insbesondere innerhalb der Vorbehandlungsstation 112, dar.

Der Prozesswert S86 ist eine Ventilstellung des Ventils 232.

Der Prozesswert V62Punkt ist ein Volumenstrom.

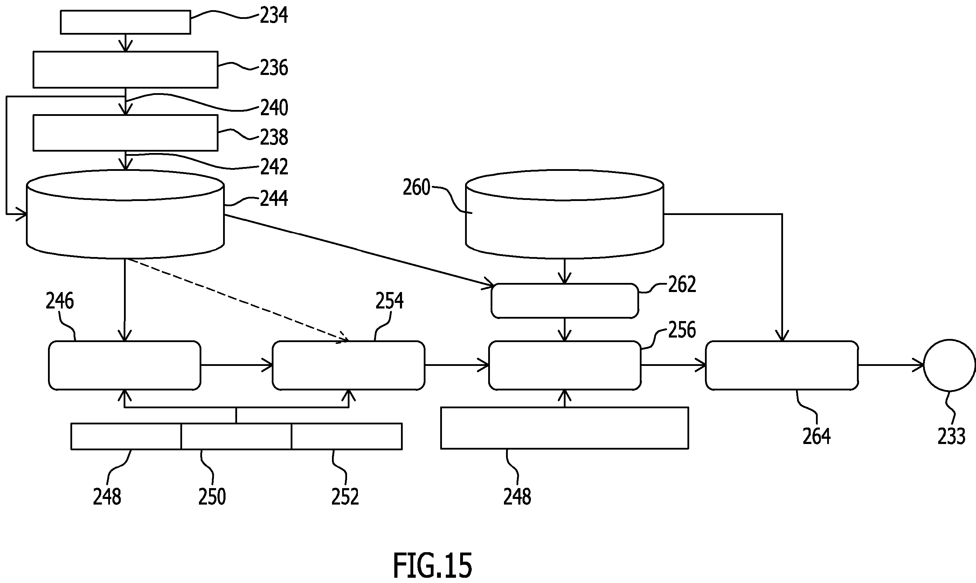

Vorzugsweise wird zur Durchführung des Verfahrens zur Anomalie- und/oder Fehlererkennung ein Anomalie- und/oder Fehlermodell 233 der verfahrenstechnischen Anlage 101, insbesondere der Vorbehandlungsstation 112, erstellt, welches Informationen über die Auftretenswahrscheinlichkeit der oben genannten Prozesswerte umfasst (vergl. Fig. 15).

Die Erstellung des Anomalie- und/oder Fehlermodells 233 erfolgt vorzugsweise wie folgt:
Zunächst werden Testsignale insbesondere unter Berücksichtigung von Auslegungsdaten 234 im Rahmen einer Testsignalgenerierung 236 erzeugt.

Insbesondere werden aufgrund der Auslegungsdaten 234 Grenzen für die Testsignale vorgegeben, beispielsweise eine maximale Amplitude von Stellgrößensprüngen bei der Vorgabe von Sprungfunktionen.

Die Auslegungsdaten 234 umfassen beispielsweise eine oder mehrere folgenden Informationen:
- Sensortyp (Temperatursensor, Durchflusssensor, Ventilstellung, Drucksensor etc.) und/oder Aktortyp (Ventil, Ventilator, Klappe, E-Motor);
- zulässige Wertebereiche von Sensoren und/oder Aktoren;
- Signaltyp von Sensor und/oder Aktor (float, integer).

Die verfahrenstechnische Anlage 101, insbesondere die Vorbehandlungsstation 112, wird mittels der Testsignale vorzugsweise dynamisch angeregt. Dies ist in Fig. 15 mit dem Bezugszeichen 238 gekennzeichnet. Dabei ist es denkbar, dass bei der Anregung mit Testsignalen gezielt Anomalien und/oder Fehlersituationen erzeugt werden.

Bei der Anregung der verfahrenstechnischen Anlage 101, insbesondere der Vorbehandlungsstation 112, mit Testsignalen werden vorzugsweise Systemeingangssignale 240 und Systemausgangssignale 242 generiert.

Die Systemeingangssignale 240 und die Systemausgangssignale 242 werden vorzugsweise in einer Testsignaldatenbank 244 gespeichert.

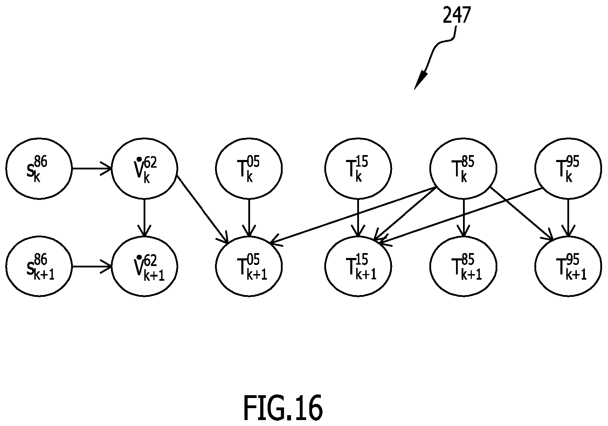

Anschließend wird vorzugsweise eine Strukturidentifikation 246 der verfahrenstechnischen Anlage 101, insbesondere der Vorbehandlungsstation 112, durchgeführt. Dabei wird vorzugsweise ein Strukturgraph 247 der verfahrenstechnischen Anlage 101, insbesondere der Vorbehandlungsstation 112, ermittelt (vergl. Fig. 16).

Die Strukturidentifikation 246, insbesondere die Ermittlung des Strukturgraphen erfolgt vorzugsweise unter Verwendung eines maschinellen Lernverfahrens, vorzugsweise unter Verwendung von Zusammenhangsmaßen, mittels welcher nichtlineare Zusammenhänge wiedergebbar sind, beispielsweise mittels Transinformation ("mutual information").

Günstig kann es ferner sein, wenn zur Strukturidentifikation 246 Expertenwissen 248 herangezogen wird, das heißt insbesondere Wissen über Zusammenhänge im Prozess.

Dabei sind beispielsweise Kanten zwischen Knoten des zu ermittelnden Strukturgraphen durch eine Vorkonfiguration des Strukturgraphen mittels Informationen aus Expertenwissen, bekannten Schaltplänen und/oder Verfahrensschemata 250 ausschließbar. Insbesondere ist dabei ein Rechenaufwand für die Ermittlung des Strukturgraphen reduzierbar.

Günstig kann es ferner sein, wenn der Strukturgraph unter Verwendung der jeweils eindeutigen Bezeichnung der Prozesswerte anhand eines Nummerierungssystems der verfahrenstechnischen Anlage 101, insbesondere der Vorbehandlungsstation 112, ermittelt wird, das heißt anhand einer Semantik 252 der Bezeichnung der Prozesswerte.

Insbesondere ist es denkbar, dass der mittels des maschinellen Lernverfahrens ermittelte Strukturgraph mittels Expertenwissen 248, mittels bekannter Schaltpläne und/oder Verfahrensschemata 250 und/oder mittels der Bezeichnungen in dem Nummerierungssystem der verfahrenstechnischen Anlage 101 (Semantik 252) auf seine Plausibilität überprüft wird.

Vorzugsweise werden anschließend Kausalitäten 254 in der ermittelten Prozessstruktur, insbesondere "Pfeilrichtungen" in dem ermittelten Strukturgraphen, ermittelt.

Kausalitäten 254 in der ermittelten Prozessstruktur werden beispielsweise aus bei der Anregung der verfahrenstechnischen Anlage 101 mit Testsignalen ermittelten Systemeingangssignalen 240 und Systemausgangssignalen 242 der verfahrenstechnischen Anlage 101 abgeleitet, beispielsweise anhand des jeweiligen zeitlichen Verlaufs der Systemeingangssignale 240 und der Systemausgangssignale 242.

Alternativ oder ergänzend dazu ist es denkbar, dass Kausalitäten 254 aus bei der Anregung der verfahrenstechnischen Anlage 101 mit Testsignalen ermittelten Systemeingangssignalen 240 und Systemausgangssignalen 242 mittels Verfahren zur kausalen Inferenz abgeleitet werden.

Zur Ermittlung der Kausalitäten 254 werden vorzugsweise ferner Expertenwissen 248, Verfahrensschemata 250 und/oder die Bezeichnungen in dem Nummerierungssystem der verfahrenstechnischen Anlage 101 (Semantik 252) herangezogen.

Vorzugsweise sind mittels der ermittelten Kausalitäten 254 in der ermittelten Prozessstruktur beziehungsweise in dem ermittelten Strukturgraphen die für eine erkannte Anomalie ursächlichen Prozesswerte auffindbar.

Nach der Strukturidentifikation 246 und/oder der Ermittlung der Kausalitäten 254 wird vorzugsweise eine Strukturparametrierung 256 durchgeführt.

Mittels der Strukturidentifikation 246 ist vorzugsweise die Strukturparametrierung 256 erleichterbar. Ein Rechenaufwand für die Strukturparametrierung 256 ist mittels der Strukturidentifikation 246 vorzugsweise reduzierbar.

Die Strukturparametrierung 256 erfolgt vorzugsweise unter Verwendung eines Verfahrens zur Ermittlung von Wahrscheinlichkeitsdichtefunktionen, insbesondere unter Verwendung Gaußscher Mischmodelle.

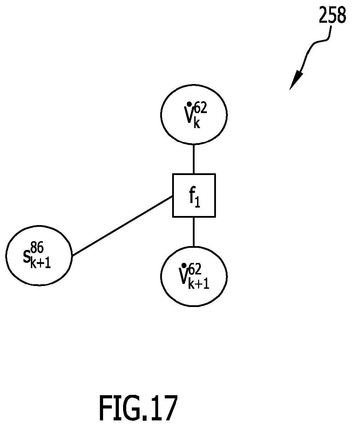

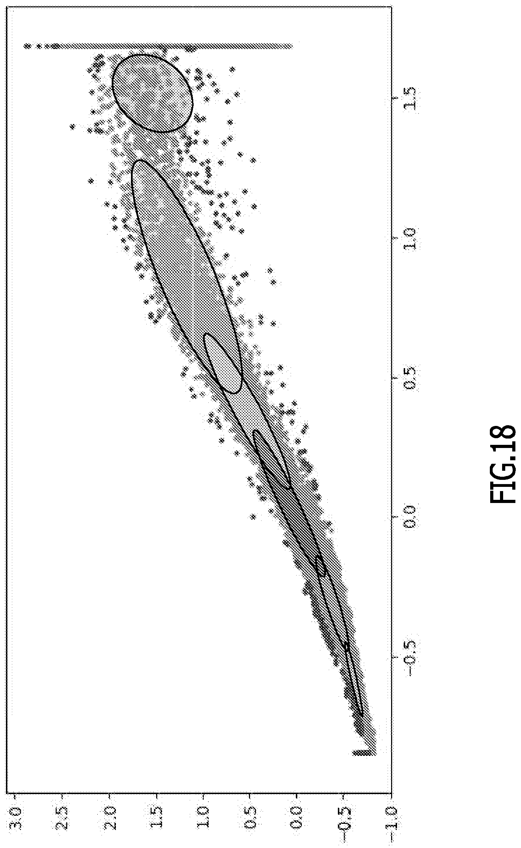

Die Strukturparametrierung 256 wird beispielsweise für die gemeinsame Wahrscheinlichkeitsdichtefunktion f1 der in Fig. 17 dargestellten Clique 258 anhand Gaußscher Mischmodelle durchgeführt (vergl. Fig. 18).

Vorzugsweise wird für die Strukturparametrierung 256 ebenfalls Expertenwissen 248 herangezogen.

Zur Strukturparametrierung 256 werden beispielsweise bekannte physikalische Zusammenhänge zwischen Prozesswerten und/oder physikalische Kennfelder von Funktionselementen der verfahrenstechnischen Anlage 101, insbesondere der Vorbehandlungsstation, herangezogen. Beispielsweise wird ein Kennfeld des Ventils 232 herangezogen.

Günstig kann es ferner sein, wenn Expertenwissen 248 über Fehlersituationen zur Strukturparametrierung 256 herangezogen wird.

Mittels eines bekannten Ventilkennfelds des Ventils 232 ist beispielsweise ein Zusammenhang zwischen der Ventilstellung S86 und dem Volumenstrom V62Punkt beschreibbar.

Zur Strukturparametrierung 256 unter Verwendung von Verfahren zur Ermittlung von Wahrscheinlichkeitsdichtefunktionen, insbesondere unter Verwendung Gaußscher Mischmodelle, werden vorzugsweise in einer Betriebsdatenbank 260 gespeicherte Daten aus dem regulären Betrieb der verfahrenstechnischen Anlage 101, insbesondere der Vorbehandlungsstation 112, und/oder Daten aus der Testsignaldatenbank 244 verwendet.

Beispielsweise werden zur Strukturparametrierung 256 unter Verwendung von Verfahren zur Ermittlung von Wahrscheinlichkeitsdichtefunktionen insbesondere in einer Datenbank 244, 260 gespeicherte Stell-, Mess- und/oder Regelgrößen verwendet.

Vorzugsweise werden zur Strukturparametrierung 256 unter Verwendung von Verfahren zur Ermittlung von Wahrscheinlichkeitsdichtefunktionen Daten aus dem laufenden Betrieb der verfahrenstechnischen Anlage 101, insbesondere der Vorbehandlungsstation, verwendet , welche über einen Zeitraum von mindestens 2 Wochen, vorzugsweise von mindestens 4 Wochen, beispielsweise von mindestens 8 Wochen, gespeichert werden.

Die Daten werden vor der Strukturparametrierung 256 vorzugsweise vorverarbeitet.

Bei der Vorverarbeitung werden vorzugsweise Daten der verfahrenstechnischen Anlage 101, welche nicht betriebs- beziehungsweise produktionsbereiten Betriebszuständen der verfahrenstechnischen Anlage 101 zugeordnet sind (beispielsweise abgeschaltete Anlage, Wartungsphasen, etc.), ausgeschlossen, insbesondere anhand von Alarmen und Statusbits, welche den Zustand der verfahrenstechnischen Anlage 101, insbesondere der Vorbehandlungsstation 112, beschreiben.

Günstig kann es ferner sein, wenn Daten der verfahrenstechnischen Anlage 101 durch Filterung vorverarbeitet werden, beispielsweise mittels Tiefpassfiltern und/oder mittels Butterworthfiltern.

Vorzugsweise werden die Daten ferner auf eine einheitliche Zeitschrittweite interpoliert.

Bei der Erstellung des Anomalie- und/oder Fehlermodells 233 wird vorzugsweise im Rahmen einer Grenzwertoptimierung 264 ein Grenzwert für die Auftretenswahrscheinlichkeit eines Prozesswertes festgelegt.

Der Grenzwert für die Auftretenswahrscheinlichkeit wird vorzugsweise derart festgelegt, dass eine Anomalie bei einer Unterschreitung des Grenzwertes erkannt wird.

Die Festlegung des Grenzwerts erfolgt vorzugsweise mittels eines nichtlinearen Optimierungsverfahrens, beispielsweise mittels des Nelder-Mead-Verfahrens.

Alternativ oder ergänzend dazu ist es denkbar, dass die Festlegung des Grenzwerts mittels Quantilen erfolgt.

Grenzwerte für die Auftretenswahrscheinlichkeit der Prozesswerte sind vorzugsweise optimierbar, beispielsweise durch Vorgabe einer "False-Positive-Rate".

Ferner ist es denkbar, dass die Grenzwerte nach der ersten Erstellung des Anomalie- und/oder Fehlermodells 233 angepasst werden, insbesondere im Fall einer zu hohen Anzahl an Fehlalarmen.

Eine Anomalie -und/oder Fehlererkennung anhand des Anomalie- und/oder Fehlermodells 233 erfolgt vorzugsweise wie folgt:
Es kommt beispielsweise zu einem Ventilausfall des Ventils 232 und damit zu einer Abweichung der Sensorwerte vom abgebildeten Normalzustand in den einzelnen Cliquen.

Die Auftretenswahrscheinlichkeiten der Sensorwerte in den Cliquen werden im Betrieb der verfahrenstechnischen Anlage 101, insbesondere im Betrieb der Vorbehandlungsstation 112, ausgewertet und bei Unterschreitung der berechneten Grenzwerte kommt es zu detektierten Anomalien in den verschieden Cliquen.

Der Ventilausfall des Ventils 232 führt zunächst zu einer Anomalie in der Clique 258 der Ventilstellung S86, wobei eine Meldung durch das Anomalie- und/oder Fehlererkennungssystems 148 ausgegeben wird.

Im weiteren Zeitverlauf entstehen durch Fehlerfortpflanzung weitere Anomalien welche später auch die prozessrelevante Größe, beispielsweise die Beckentemperatur T35 des Beckens 224, beeinflussen.

Vorzugsweise enthält die Meldung durch das Anomalie- und/oder Fehlererkennungssystems 148 eine oder mehrere der folgenden Informationen:
- Detektionszeitpunkt der Anomalie;
- Clique(n) des Auftretens der Anomalie mit beteiligten Sensoren.

Durch die frühzeitige Erkennung der Anomalie und die Meldung an den Benutzer kann bei einem rechtzeitigen Eingreifen vorzugsweise eine Abweichung der prozessrelevanten Größe, das heißt der Beckentemperatur T35 des Beckens 224, verhindert werden.

Der Benutzer kann anschließend eine Fehlerursache, das heißt den Ventilausfall, für das Auftreten der Anomalie definieren.

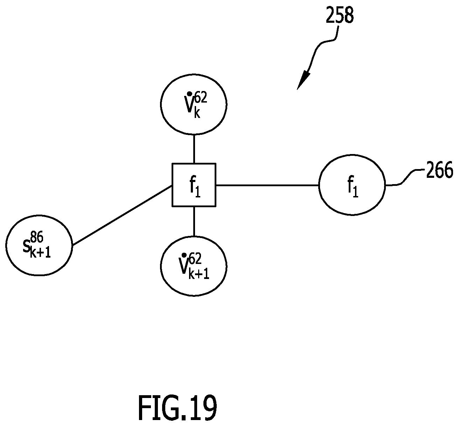

Durch die Zuweisung der Fehlerursache wird die Clique 258 um einen Knoten 266 erweitert und die Wahrscheinlichkeitsdichtefunktion der anomalen Daten in den funktionalen Zusammenhang integriert (vergl. Fig. 19).

Nach der Integration der Fehlerursache wird das Verfahren zur Anomalie- und/oder Fehlererkennung wie zuvor ausgeführt. Beim Auftreten einer Anomalie werden zusätzlich die Wahrscheinlichkeiten der definierten Fehlerursachen ausgegeben.

Ein Benutzer erhält nun durch die Meldung des Anomalie- und/oder Fehlererkennungssystems 148 eine oder mehrere der folgenden Informationen:
- Detektionszeitpunkt der Anomalie;
- Clique(n) des Auftretens der Anomalie mit beteiligten Sensoren;
- Wahrscheinlichkeiten der definierten Fehlerursachen.

## Patentansprüche

1. Verfahren zur Vorhersage von Prozessabweichungen in einer verfahrenstechnischen Anlage (101),
wobei das Verfahren Folgendes umfasst:
- automatisches Erstellen eines Vorhersagemodells;
- Vorhersage von Prozessabweichungen im Betrieb der verfahrenstechnischen Anlage (101) unter Verwendung des Vorhersagemodells,
wobei mittels des Vorhersagemodells Prozessabweichungen von produktionskritischen Prozesswerten in der verfahrenstechnischen Anlage (101) vorhergesagt werden auf Basis von sich ändernden Prozesswerten während einem Betrieb der verfahrenstechnischen Anlage (101),
wobei zum automatischen Erstellen des Vorhersagemodells Prozesswerte und/oder Statusgrößen im Betrieb der verfahrenstechnischen Anlage (101) über einen vorgegebenen Zeitraum gespeichert werden,
wobei zum Erstellen des Vorhersagemodells ein maschinelles Lernverfahren durchgeführt wird,
wobei die über den vorgegebenen Zeitraum gespeicherten Prozesswerte und/oder Statusgrößen zur Erstellung des Vorhersagemodells verwendet werden,
**dadurch gekennzeichnet, dass**
die verfahrenstechnische Anlage (101) eine Lackieranlage (102) ist,
Prozesswerte im Betrieb der verfahrenstechnischen Anlage (101) zeitlich synchronisiert mit einer erkannten Fehlersituation gespeichert werden,
Prozesswerte mit einem Zeitstempel versehen werden, mittels welchem die Prozesswerte einem Zeitpunkt eindeutig zuordenbar sind,
zu einem Training des Vorhersagemodells eine ausgewählte Anzahl von Prädiktionsdatensätzen mit Prozessabweichungen (222) und eine ausgewählte Anzahl von Prädiktionsdatensätzen ohne Prozessabweichungen (220) verwendet werden, und
die Auswahl der Anzahl von Prädiktionsdatensätzen mit Prozessabweichung aufgrund des folgenden Kriteriums erfolgt: einem zeitlichen Mindestabstand zwischen zwei Prädiktionsdatensätzen mit Prozessabweichungen.

2. Verfahren nach Anspruch 1, **dadurch gekennzeichnet, dass** das Verfahren zur Vorhersage von Prozessabweichungen in einer industriellen Zuluftanlage (128), in einer Vorbehandlungsstation (112), in einer Station zur kathodischen Tauchlackierung (114) und/oder in einer Trocknerstation (116, 120, 124) durchgeführt wird.

3. Verfahren nach Anspruch 1, **dadurch gekennzeichnet, dass** der vorgegebene Zeitraum, über welchen Prozesswerte und/oder Statusgrößen im Betrieb der verfahrenstechnischen Anlage (101) gespeichert werden, abhängig von einem oder mehreren der folgenden Kriterien vorgegeben wird:
- die verfahrenstechnische Anlage (101) ist in dem vorgegebenen Zeitraum zu mindestens ungefähr 60 %, vorzugsweise zu mindestens ungefähr 80 %, in einem betriebsbereiten Zustand, insbesondere für einen Produktionsbetrieb;
- die verfahrenstechnische Anlage (101) ist in dem vorgegebenen Zeitraum zu mindestens ungefähr 60 %, vorzugsweise zu mindestens ungefähr 80 %, in einem produktionsfähigen Zustand;
- die verfahrenstechnische Anlage (101) wird in dem vorgegebenen Zeitraum insbesondere mit sämtlichen möglichen Betriebsstrategien betrieben;
- einer vorgegebenen Anzahl von Prozessabweichungen und/oder Störfällen in dem vorgegebenen Zeitraum.

4. Verfahren nach Anspruch 1, **dadurch gekennzeichnet, dass** das maschinelle Lernverfahren auf Basis von Features durchgeführt wird, welche aus den über den vorgegebenen Zeitraum gespeicherten Prozesswerten und/oder Statusgrößen extrahiert werden.

5. Verfahren nach Anspruch 4, **dadurch gekennzeichnet, dass** zur Extraktion der Features eines oder mehrere der folgenden verwendet werden:
- statistische Kennzahlen;
- Koeffizienten aus einer Hauptkomponentenanalyse;
- lineare Regressionskoeffizienten;
- dominante Frequenzen und/oder Amplituden aus dem Fourier-Spektrum.

6. Verfahren nach Anspruch 1, **dadurch gekennzeichnet, dass** die Auswahl der Anzahl von Prädiktionsdatensätzen mit Prozessabweichung aufgrund eines oder mehrerer der folgenden Kriterien erfolgt:
- einer automatischen Auswahl anhand von definierten Regeln;
- einer Auswahl durch einen Benutzer.

7. Verfahren nach Anspruch 1 oder 6, **dadurch gekennzeichnet, dass** Prädiktionsdatensätze mit Prozessabweichungen als solche gekennzeichnet werden, wenn innerhalb eines vorgegebenen Zeitintervalls eine Prozessabweichung auftritt.

8. Verfahren nach Anspruch 7, **dadurch gekennzeichnet, dass** die über den vorgegebenen Zeitraum gespeicherten Prozesswerte und/oder Statusgrößen durch eine Vorverarbeitung in Prädiktionsdatensätze zusammengefasst werden.

9. Verfahren nach Anspruch 8, **dadurch gekennzeichnet, dass** die Vorverarbeitung Folgendes umfasst:
- Regularisierung der über den vorgegebenen Zeitraum gespeicherten Prozesswerte;
- Zusammenfassung der Prozesswerte und/oder Statusgrößen in Prädiktionsdatensätze durch Einteilung der Prozesswerte und/oder Statusgrößen in Zeitfenster mit zeitlicher Verschiebung.

10. Vorhersagesystem (146) zur Vorhersage von Prozessabweichungen in einer verfahrenstechnischen Anlage, welches zur Durchführung des Verfahrens zur Vorhersage von Prozessabweichungen in einer verfahrenstechnischen Anlage (101), beispielsweise in einer Lackieranlage (102), nach einem der Ansprüche 1 bis 9 ausgebildet und eingerichtet ist.

11. Industrielles Steuerungssystem (100), welches ein Vorhersagesystem (146) nach Anspruch 10 umfasst.

## Claims

1. Method for predicting process deviations in a process plant (101), wherein the method comprises the following:
- automatically creating a prediction model;
- predicting process deviations during operation of the process plant (101) using the prediction model, wherein process deviations from production-critical process values in the process plant (101) are predicted by means of the prediction model on the basis of changing process values during operation of the process plant (101), wherein process values and/or status variables are stored during operation of the process plant (101) over a predefined period of time in order to automatically create the prediction model,
wherein a machine learning method is carried out in order to create the prediction model,
wherein the process values and/or status variables stored over the predefined period of time are used to create the prediction model,
**characterized in that**
the process plant (101) is a painting plant (102), process values are stored in sync with a detected fault situation during operation of the process plant (101), process values are provided with a time stamp, by means of which the process values can be uniquely assigned to a point in time, a selected number of prediction data sets with process deviations (222) and a selected number of prediction data sets without process deviations (220) are used to train the prediction model, and the number of prediction data sets with a process deviation is selected on the basis of the following criterion: a minimum time interval between two prediction data sets with process deviations.

2. Method according to Claim 1, **characterized in that** the method for predicting process deviations is carried out in an industrial supply air system (128), in a pre-treatment station (112), in a station for cathodic dip painting (114) and/or in a dryer station (116, 120, 124).

3. Method according to Claim 1, **characterized in that** the predefined period of time over which process values and/or status variables are stored during operation of the process plant (101) is predefined on the basis of one or more of the following criteria:
- the process plant (101) is at least approximately 60%, preferably at least approximately 80%, in a ready-to-operate state, in particular for production operation, in the predefined period of time;
- the process plant (101) is at least approximately 60%, preferably at least approximately 80%, in a production-capable state in the predefined period of time;
- the process plant (101) is operated in particular with all possible operating strategies in the predefined period of time;
- a predefined number of process deviations and/or incidents in the predefined period of time.

4. Method according to Claim 1, **characterized in that** the machine learning method is carried out on the basis of features which are extracted from the process values and/or status variables stored over the predefined period of time.

5. Method according to Claim 4, **characterized in that** one or more of the following are used to extract the features:
- statistical characteristic figures;
- coefficients from a main component analysis;
- linear regression coefficients;
- dominant frequencies and/or amplitudes from the Fourier spectrum.

6. Method according to Claim 1, **characterized in that** the number of prediction data sets with a process deviation is selected on the basis of one or more of the following criteria:
- an automatic selection based on defined rules;
- a selection by a user.

7. Method according to Claim 1 or 6, **characterized in that** prediction data sets with process deviations are characterized as such when a process deviation occurs within a predefined time interval.

8. Method according to Claim 7, **characterized in that** the process values and/or status variables stored over the predefined period of time are combined into prediction data sets by means of preprocessing.

9. Method according to Claim 8, **characterized in that** the preprocessing comprises the following:
- regularizing the process values stored over the predefined period of time;
- combining the process values and/or status variables into prediction data sets by dividing the process values and/or status variables into time windows with a time shift.

10. Prediction system (146) for predicting process deviations in a process plant, which is designed and configured to carry out the method for predicting process deviations in a process plant (101), for example in a painting plant (102), according to one of Claims 1 to 9.

11. Industrial control system (100) comprising a prediction system (146) according to Claim 10.

## Revendications

1. Procédé de prédiction d'écarts de processus dans une installation technique (101), le procédé comprenant :
- l'établissement automatique d'un modèle de prédiction ;
- la prédiction d'écarts de processus pendant le fonctionnement de l'installation technique (101) à l'aide du modèle de prédiction, les écarts de processus par rapport à des valeurs de processus critiques pour la production dans l'installation technique (101) étant prédits au moyen du modèle de prédiction sur la base de valeurs de processus qui se modifient pendant le fonctionnement de l'installation technique (101), des valeurs de processus et/ou des variables d'état étant stockées, pour l'établissement automatique du modèle de prédiction, pendant le fonctionnement de l'installation technique (101) au cours d'un intervalle de temps prédéfini,
un procédé d'apprentissage automatique étant mis en œuvre pour l'établissement du modèle de prédiction,
les valeurs de processus et/ou les variables d'état stockées au cours de l'intervalle de temps prédéfini étant utilisées pour l'établissement du modèle de prédiction,
**caractérisé en ce que**
l'installation technique (101) est une installation de peinture (102), **en ce que** des valeurs de processus sont stockées de manière synchronisée dans le temps avec une situation d'incident détectée pendant le fonctionnement de l'installation technique (101), **en ce que** des valeurs de processus sont dotées d'un horodatage au moyen duquel les valeurs de processus peuvent être associées de manière univoque à un point dans le temps, **en ce qu'**un nombre sélectionné de jeux de données de prédiction avec écarts de processus (222) et un nombre sélectionné de jeux de données de prédiction sans écarts de processus (220) sont utilisés aux fins de l'entraînement du modèle de prédiction, et **en ce que** le nombre de jeux de données de prédiction avec écarts de processus est sélectionné sur la base du critère suivant : un intervalle de temps minimum entre deux jeux de données de prédiction avec écarts de processus.

2. Procédé selon la revendication 1, **caractérisé en ce que** le procédé de prédiction d'écarts de processus est mis en œuvre dans une installation technique d'alimentation en air (128), dans une station de prétraitement (112), dans une station de peinture cathodique par immersion (114) et/ou dans une station de séchage (116, 120, 124).

3. Procédé selon la revendication 1, **caractérisé en ce que** l'intervalle de temps prédéfini au cours duquel des valeurs de processus et/ou des variables d'état sont stockées pendant le fonctionnement de l'installation technique (101) est prédéfini en fonction d'un ou de plusieurs des critères suivants :
- l'installation technique (101) est prête à fonctionner, en particulier pour une opération de production, à hauteur d'au moins environ 60 %, de préférence d'au moins environ 80 %, au cours de l'intervalle de temps prédéfini ;
- l'installation technique (101) se trouve dans un état de capacité de production à hauteur d'au moins environ 60 %, de préférence d'au moins environ 80 %, au cours de l'intervalle de temps prédéfini ;
- l'installation technique (101) est exploitée au cours de l'intervalle de temps prédéfini, en particulier avec toutes les stratégies d'exploitation possibles ;
- un nombre prédéfini d'écarts de processus et/ou d'incidents au cours de l'intervalle de temps prédéfini.

4. Procédé selon la revendication 1, **caractérisé en ce que** le procédé d'apprentissage automatique est exécuté sur la base de caractéristiques qui sont extraites des valeurs de processus et/ou des variables d'état stockées au cours de l'intervalle de temps prédéfini.

5. Procédé selon la revendication 4, **caractérisé en ce que**, pour extraire les caractéristiques, on utilise un ou plusieurs des éléments suivants :
- indices statistiques ;
- coefficients issus d'une analyse en composantes principales ;
- coefficients de régression linéaire ;
- fréquences et/ou amplitudes dominantes du spectre de Fourier.

6. Procédé selon la revendication 1, **caractérisé en ce que** le nombre de jeux de données de prédiction avec écart de processus est sélectionné sur la base d'un ou de plusieurs des critères suivants :
- une sélection automatique sur la base de règles définies ;
- une sélection par un utilisateur.

7. Procédé selon la revendication 1 ou 6, **caractérisé en ce que** des jeux de données de prédiction avec écarts de processus sont identifiés comme tels lorsqu'un écart de processus se produit au cours d'un intervalle de temps prédéfini.

8. Procédé selon la revendication 7, **caractérisé en ce que** les valeurs de processus et/ou les variables d'état stockées au cours de l'intervalle de temps prédéfini sont regroupées en jeux de données de prédiction au moyen d'un prétraitement.

9. Procédé selon la revendication 8, **caractérisé en ce que** le prétraitement comprend :
- la régulariser des valeurs de processus stockées au cours de l'intervalle de temps prédéfini ;
- la combinaison des valeurs de processus et/ou des variables d'état en des jeux de données de prédiction en divisant les valeurs de processus et/ou les variables d'état en fenêtres temporelles avec un décalage temporel.

10. Système de prédiction (146) destiné à la prédiction d'écarts de processus dans une installation technique, lequel est configuré et conçu pour la mise en œuvre du procédé de prédiction d'écarts de processus dans une installation technique (101), par exemple dans une installation de peinture (102), selon l'une des revendications 1 à 9.

11. Système de commande industriel (100) comprenant un système de prédiction (146) selon la revendication 10.
